(19) Europäisches Patentamt
European Patent Office
Office européen des brevets

(11) Veröffentlichungsnummer : **0 362 646 B1**

(12) **EUROPÄISCHE PATENTSCHRIFT**

(45) Veröffentlichungstag der Patentschrift :
**27.05.92 Patentblatt 92/22**

(51) Int. Cl.[5] : **C08L 69/00,** C08G 64/04

(21) Anmeldenummer : **89117612.5**

(22) Anmeldetag : **23.09.89**

(54) **Mischungen von speziellen, neuen Polycarbonaten mit anderen Thermoplasten oder mit Elastomeren.**

(30) Priorität : **06.10.88 DE 3833953**
**01.11.88 DE 3837089**
**29.11.88 DE 3840166**

(43) Veröffentlichungstag der Anmeldung :
**11.04.90 Patentblatt 90/15**

(45) Bekanntmachung des Hinweises auf die Patenterteilung :
**27.05.92 Patentblatt 92/22**

(84) Benannte Vertragsstaaten :
**AT BE CH DE ES FR GB GR IT LI LU NL SE**

(56) Entgegenhaltungen :
**EP-A- 0 019 126**
**EP-A- 0 019 127**
**EP-A- 0 164 477**
**EP-A- 0 297 353**
**EP-A- 0 359 953**
**US-A- 4 368 315**

(73) Patentinhaber : **BAYER AG**
**W-5090 Leverkusen 1 Bayerwerk (DE)**

(72) Erfinder : **Freitag, Dieter, Dr.**
**Hasenheide 10**
**W-4150 Krefeld 1 (DE)**
Erfinder : **Westeppe, Uwe, Dr.**
**Vogelskamp 72**
**W-4020 Mettmann (DE)**
Erfinder : **Weirauch, Kurt, Dr.**
**Am Vogelherd 32**
**W-5060 Bergisch-Gladbach (DE)**
Erfinder : **Weymans, Günther, Dr.**
**Karl-Arnold-Strasse 4**
**W-5090 Leverkusen 1 (DE)**

EP 0 362 646 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Mischungen, enthaltend

a) thermoplastische Polycarbonate auf Basis von Diphenolen der Formel (I)

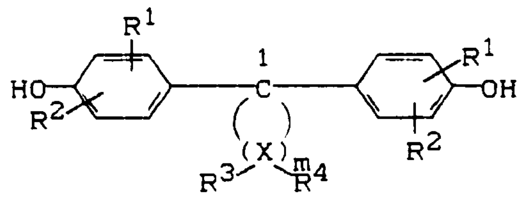

(I),

worin

$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,

m eine ganze Zahl von 4 bis 7,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X, beide Substituenten $R^3$ und $R^4$ Alkylgruppen sind.

und

b) Elastomere oder andere Thermoplasten als die der Komponente a) und gegebenenfalls

c) übliche Additive,

Verfahren zu ihrer Herstellung und ihre Verwendung zur Herstellung von Folien.

In der deutschen Patentanmeldung P 3 832 396.6 sind die Polycarbonate (a) der erfindungsgemäßen Mischungen sowie ihre Ausgangsprodukte und ihre Herstellung beschrieben.

Ausgangsprodukte für die Polycarbonate (a) sind Dihydroxydiphenylcycloalkane der Formel (I)

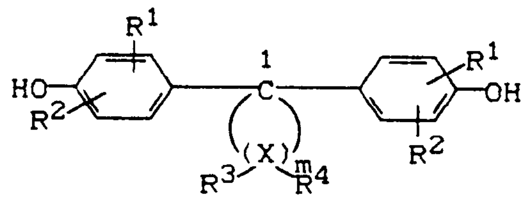

(I),

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4 bis 7, bevorzugt 4 oder 5,

$R^3$ und $R^4$, für jedes X individuell wählbar, unabhängig voneinander Wasserstoff oder $C_1$-$C_6$-Alkyl

und

X Kohlenstoff bedeuten,

mit der Maßgabe, daß an mindestens einem Atom X biede Substituten $R^3$ und $R^4$ Alkylgruppen sind.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyldisubstitution in β-Stellung zu C-1 bevorzugt. Besonders bevorzugt ist, daß ein X-Atom in β-Stellung dialkylsubstituiert ist und ein X-Atom in β'-Stellung monoalkylsubstituiert ist.

Bevorzugt sind Dihydroxydiphenylcycloalkane mit 5 und 6 Ring-C-Atomen im cycloaliphatischen Rest (m = 4 oder 5 in Formel (I)), beispielsweise die Diphenole der Formeln

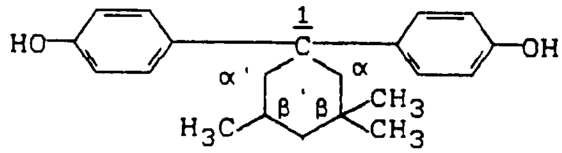

(II)

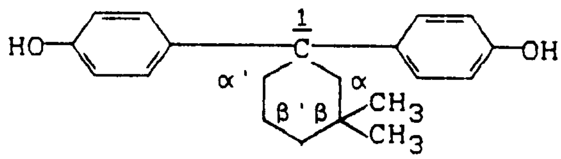

(III) und

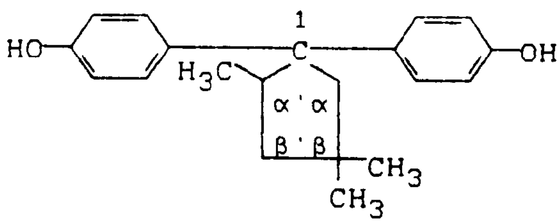

(IV),

wobei das 1,1-Bis-(4-hydroxyphenyl)-3,3,5-trimethylcyclohexan (Formel II) besonders bevorzugt ist.

Die Dihydroxydiphenylcycloalkane der Formel (I) können in an sich bekannter Weise durch Kondensation von Phenolen der Formel (V)

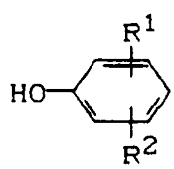

(V)

und Ketonen der Formel (VI)

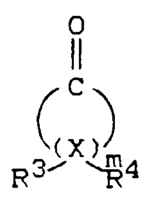

(VI)

hergestellt werden, wobei in den Formeln (V) und (VI) X, $R^1$, $R^2$, $R^3$, $R^4$ und m die für Formel (I) angegebene Bedeutung haben.

Die Phenole der Formel (V) sind entweder literaturbekannt oder nach literaturbekannten Verfahren erhältlich (siehe beispielsweise für Kresole und Xylenole, Ullmanns Encyklopädie der technischen Chemie 4. neubearbeitete und erweiterte Auflage Band 15, Seiten 61 - 77, Verlag Chemie-Weinheim-New York 1978; für Chlorphenol, Ullmanns Encyklopädie der technischen Chemie, 4. Auflage, Verlag Chemie, 1975, Band 9, Seiten 573-582; und für Alkylphenole, Ullmanns Encyklopädie der technischen Chemie, 4. Auflage, Verlag Chemie

1979, Band 18, Seiten 191-214).

Beispiele für geeignete Phenole der Formel (V) sind: Phenol, o-Kresol, m-Kresol, 2,6-Dimethylphenol, 2-Chlorphenol, 3-Chlorphenol, 2,6-Dichlorphenol, 2-Cyclohexylphenol, 2,6-Diphenylphenol und o-Benzylphenol.

Die Ketone der Formel (VI) sind literaturbekannt (siehe beispielsweise) Beilsteins Handbuch der Organischen Chemie, 7. Band, 4. Auflage, Springer-Verlag, Berlin, 1925 und die entsprechende Ergänzungsbände 1 bis 4, und J. Am. Chem. Soc. Vol 79 (1957), Seiten 1488-1492, US-PS 2 692 289, J. Chem. Soc., (1959), 2186-2192 und J. Org. Chem. Vol. 38, (1973), Seiten 4431-4431, J. Am. Chem. Soc. 87, (1965), Seite 1353-1369. Ein allgemeines Verfahren zur Herstellung von Ketonen der Formel (VI) ist beispielsweise in "Organikum, 15. Auflage, 1977, VEB-Deutscher Verlag der Wissenschaften, Berlin, beispielsweise Seite 698. beschrieben.

Beispiele für bekannte Ketone der Formel (VI) sind:

3,3-Dimethylcyclopentanon, 3,3-Dimethylcyclohexanon, 4,4-Dimethylcyclohexanon, 3-Ethyl-3-Methylcyclopentanon, 2,3,3-Trimethylcyclopentanon, 3,3,4-Trimethylcyclopentanon, 3,3-Dimethylcyclopheptanon, 4,4-Dimethylcycloheptanon, 3-Ethyl-3-methylcyclohexanon, 4-Ethyl-4-methylcyclohexanon, 2,3,3-Trimethylcyclohexanon, 2,4,4-Trimethylcyclohexanon, 3,3,4-Trimethylcyclohexanon, 3,3,5-Trimethylcyclohexanon, 3,4,4-Trimethylcyclohexanon, 2,3,3,4-Tetramethylcyclopentanon, 3,3,5-Trimethylcycloheptanon, 3,5,5-Trimethylcycloheptanon, 5-Ethyl-2,5-dimethylcycloheptanon, 2,3,3,5-Tetramethylcycloheptanon, 2,3,5,5-Tetramethylcycloheptanon, 3,3,5,5-Tetramethylcycloheptanon, 4-Ethyl-2,3,4-trimethylcyclopentanon, 3-Ethyl-4-isopropyl-3-methyl-cyclopentanon, 4-sec. Butyl-3,3-dimethylcyclopentanon, 2-Isopropyl-3,3,4-trimethylcyclopentanon, 3-Ethyl-4-isopropyl-3-methylcyclohexanon, 4-Ethyl-3-isopropyl-4-methyl-cyclohexanon, 3-sec.Butyl-4,4-dimethylcyclohexanon, 2-Butyl-3,3,4-trimethylcyclopentanon, 2-Butyl-3,3,4-trimethylcyclohexanon, 4-Butyl-3,3,5-trimethylcyclohexanon, 3-Isohexyl-3-methylcyclohexanon und 3,3,8-Trimethylcyclooctanon.

Beispiele für bevorzugte Ketone sind

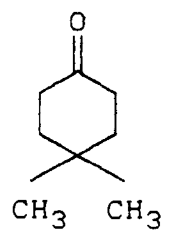

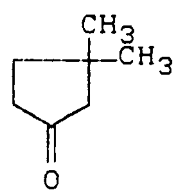

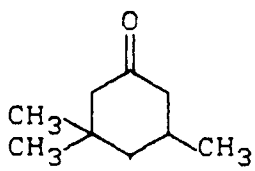

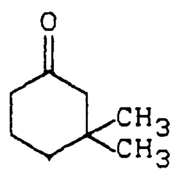

und

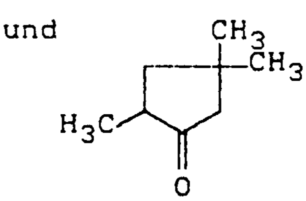

Zur Bisphenolherstellung werden im allgemeinen 2 bis 10 Mol, vorzugsweise 2,5 bis 6 Mol Phenol (V) pro Mol Keton (VI), verwendet. Bevorzugte Reaktionszeiten betragen 1 bis 100 Stunden. Im allgemeinen arbeitet man bei Temperaturen von -30°C bis 300°C, vorzugsweise von -15°C bis 150°C und bei Drücken von 1 bis 20 bar, vorzugsweise von 1 bis 10 bar.

Die Kondensation wird im allgemeinen in Gegenwart saurer Katalysatoren durchgeführt. Beispiele sind Chlorwasserstoff, Bromwasserstoff, Fluorwasserstoff, Bortrifluorid, Aluminiumtrichlorid, Zinkdichlorid, Titantetrachlorid, Zinntetrachlorid, Phosphorhalogenide, Phosphorpentoxid, Phosphorsäure, konzentrierte Salzsäure oder Schwefelsäure sowie Mischungen aus Essigsäure und Acetanhydrid. Die Verwendung saurer Ionenaustauscher ist ebenfalls möglich.

Weiterhin kann die Umsetzung durch Zugabe von Co-Katalysatoren wie $C_1$-$C_{18}$-Alkyl-Mercaptanen, Schwefelwasserstoff, Thiophenolen, Thiosäuren und Dialkylsulfiden, bevorzugt in Mengen von 0,01 bis 0,4 Mol/Mol Keton, insbesondere 0,05 bis 0,2 Mol/Mol Keton beschleunigt werden.

Die Kondensation kann ohne Lösungsmittel oder in Gegenwart eines inerten Lösungsmittels (z.B. aliphatischer und aromatischer Kohlenwasserstoff, Chlorkohlenwasserstoff) durchgeführt werden.

In den Fällen, in denen der Katalysator gleichzeitig als wasserentziehendes Mittel fungiert, ist es nicht erforderlich, zusätzlich wasserentziehende Mittel einzusetzen, letzteres ist jedoch zur Erzielung guter Umsätze in jedem Fall dann vorteilhaft, wenn der eingesetzte Katalysator das Reaktionswasser nicht bindet.

Geeignete wasserentziehende Mittel sind beispielsweise Acetanhydrid, Zeolithe, Polyphosphorsäure und Phosphorpentoxid.

Man kann Phenol (V) und Keton (VI) im Molverhältnis (V) : (VI) von 2:1 bis 10:1, vorzugsweise von 2,5 : 1 bis 6 : 1 bei Temperaturen von -30°C bis 300°C, vorzugsweise von -15°C bis 150°C und bei Drücken von 1 bis 20 bar, vorzugsweise von 1 bis 10 bar in Anwesenheit saurer Katalysatoren und gegebenenfalls in Anwesenheit von Co-Katalysatoen und/oder Lösungsmitteln und/oder wasserentziehenden Mitteln umsetzen.

Bevorzugt sind in Formel (I) an 1 - 2 Atomen X, insbesondere nur an einem Atom X, $R^3$ und $R^4$ gleichzeitig Alkyl. Bevorzugter Alkylrest ist Methyl; ebenfalls verwendbar sind Ethyl oder $C_3$-$C_6$-Alkylreste, die geradkettig oder verzweigt sein können. Die X-Atome in α-Stellung zu dem di-phenylsubstituierten C-Atom (C-1) sind bevorzugt nicht dialkylsubstituiert, dagegen ist die Disubstitution mit Alkyl in β-Stellung zu C-1 bevorzugt. Besonders bevorzugt ist eine β-Stellung dialkylsubstituiert und die andere monoalkylsubstituiert.

In manchen Fällen verläuft die Reaktion nicht ganz einheitlich, d.h. es können mehrere, unterschiedliche Produkte entstehen, so daß die gewünschte Verbindung zunächst aus einem Gemisch isoliert werden muß. Für Einzelheiten der Kondensation sei auf Schnell, Chemistry und Physics of Polycarbonates, Interscience Publishers, New York 1964 verwiesen. Manchmal kann die Reaktion durch Wahl entsprechender Katalysatoren und Reaktionsbedingungen so gesteuert werden, daß die gewünschte Verbindung ausfällt oder auskristallisiert, was deren Isolierung erleichtert. Die folgende Vorschrift veranschaulicht die Herstellung des Diphenols der Formel (II):

Beispiel A.1

In einem 1 l-Rundkolben mit Rührer, Tropftrichter, Thermometer, Rückflußkühler und Gaseinleitungsrohr werden 7,5 Mol (705 g) Phenol und 0,15 Mol (30,3 g) Dodecylthiol vorgelegt und bei 28 bis 30°C mit trockenem HCl-Gas gesättigt. Zu dieser Lösung werden innerhalb von 3 Stunden eine Lösung von 1,5 Mol (210 g) Dihydroisophoron (3,3,5-Trimethyl-cyclohexan-1-on) und 1,5 Mol (151 g) Phenol zugetropft, wobei weiterhin HCl-Gas durch die Reaktionslösung zugeleitet wird. Nach beendeter Zugabe leitet man für weitere 5 Stunden HCl-Gas ein. Man läßt 8 Stunden bei Zimmertemperatur nachreagieren. Anschließend wird das überschüssige Phenol durch Wasserdampfdestillation entfernt. Der verbleibende Rückstand wird zweimal mit Petrolether (60-90) und einmal mit Methylenchorid heiß extrahiert und abfiltriert.
Ausbeute: 370 g
Schmelzpunkt: 205 biz 207°C

Beispiel A.2

Herstellung des Diphenols der Formel (II)

In einer Rührapparatur mit Rührer, Thermometer, Rückflußkühler und Gaseinleitungsrohr werden 1692 g (18 Mol) Phenol 60,6 g (0,3 Mol) Dodecylthiol und 420 g (3 Mol) Dihydroisophoron (3,3,5-Trimethyl-cyclohexan-1-on) bei 28 bis 30°C vorgelegt. In diese Lösung wird bei 28 bis 30°C 5 h trockenes HCl-Gas eingeleiten. Man läßt ca. 10 h bei 28 bis 30°C nachreagieren. Nach 95 %igem Umsatz des Ketons (GC-Kontrolle) gibt man zum Reaktionsgemisch 2,5 l Wasser und stellt durch Zugabe von 45 %iger NaOH-Lösung einen pH-Wert von 6 ein. Das Reaktionsgemisch wird eine Stunde bei 80°C gerührt und anschließend auf 25°C abgekühlt. Die wäßrige Phase wird abdekantiert und der verbleibende Rückstand mit Wasser bei 80°C gewaschen. Das erhaltene Rohprodukt wird abfiltriert und jeweils zweimal mit n-Hexan und Methylenchlorid heiß extrahiert und filtriert. Der Rückstand wird zweimal aus Xylol umkristallisiert.
Ausbeute: 753 wg
Schmelzpunkt: 209-211°C

Beispiel A.3

Herstellung des Diphenols der Formel (II)

In einer Rührapparatur mit Rührer, Thermometer, Rückflußkühler und Gaseinleitungsrohr werden 564 g (6 Mol) Phenol, 10,8 g (0,12 Mol) Butanthiol und 140 g (1 Mol) Dihydroisophoron (3,3,5-Trimethyl-cyclohexan-1-on) bei 30°C vorgelegt. Bei dieser Temperatur werden 44 g 37 %ige HCl zugegeben. Das Reaktionsgemisch

wird bei 28 bis 30°C ca. 70 h gerührt. Nach 95 %igem Umsatz des Ketons (GS-Kontrolle) gibt man zum Reaktionsgemisch 2 l Wasser und stellt durch Zugabe von 45 %iger NaOH-Lösung einen pH-Wert von 6 ein. Das Reaktionsgemisch wird eine Stunde bei 80°C gerührt und anschließend auf 25°C abgekühlt. Die wäßrige Phase wird abdekantiert und der verbleibende Rückstand mit Wasser bei 80°C gewaschen. Das erhaltene Rohprodukt wird abfiltriert und jeweils zweimal mit n-Hexan und Toluol heiß extrahiert und bei 30°C filtriert.
Ausbeute: 253 g
Schmelzpunkt: 205 bis 208°C

Beispiel A.4

Herstellung des Diphenols der Formel (Ib, $R^1$, $R^2$ = $CH_3$)

In einer Rührapparatur mit Rührer, Thermometer, Rückflußkühler und Gaseinleitungsrohr werden 2196 g (18 Mol) 2,6-Dimethylphenol, 38,2 g (0,36 Mol) ß-Mercaptopropionsäure und 420 g (3 Mol) Dihydroisophoron (3,3,5-Trimethyl-cyclohexan-1-on) bei 35°C vorgelegt. In diese Lösung wird bei 35° C 5 h trockenes HCl-Gas eingeleitet. Man läßt ca. 10 h bei 28 bis 30°C nachreagieren. Nach 95 %igem Umsatz des Ketons (GC-Kontrolle) gibt man zum Reaktionsgemisch 2,5 l Wasser und stellt durch Zugabe von 45 %iger NaOH-Lösung einen pH-Wert von 6 ein. Das Reaktionsgemisch wird eine Stunde bei 80°C gerührt und anschließend auf Raumtemperatur abgekühlt. Die wäßrige Phase wird abdekantiert und der verbleibende Rückstand mit Wasser bei 60°C gewaschen. Das erhaltene Rohprodukt wird abfiltriert und dreimal mit n-Hexan heiß extrahiert und filtriert.
Ausbeute: 865 g
Schmelzpunkt: 236 bis 238°C

Beispiel A.5

Herstellung des Diphenols der Formel (III)

Analog zu Beispiel A.2 werden anstelle von 3 Mol Dihydroisophoron 3 Mol 3,3-Dimethylcyclohexanon eingesetzt. Das Produkt wies einen Schmelzpunkt von 199 bis 201°C auf.

Die Polycarbonate (a) können gemäß der deutschen Patentanmeldung P 3 832 396.6 aus Diphenolen der Formel (I) hergestellt werden.

Es können sowohl ein Diphenol der Formel (I) unter Bildung von Homopolycarbonaten als auch mehrere Diphenole der Formel (I) unter Bildung von Copolycarbonaten verwendet werden.

Außerdem können die Diphenole der Formel (I) auch im Gemisch mit anderen Diphenolen,cbeispielsweise mit denen der Formel HO-Z-OH (VII), zur Herstellung von hochmolekularen, thermoplastischen, aromatischen Polycarbonaten verwendet werden.

Geeignete andere Diphenole der Formel HO-Z-OH (VII) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (I) oder Heteroatome als Brückenglieder enthalten kann.

Beispiele für Diphenole der Formel (VII) sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
$\alpha,\alpha'$-Bis(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 0956, der französischen Patentschrift 1 561 518 und in der Monographie "H. Schnell, Chemistry and Physics of Polycarbonates, Interscience Publishers, New York 1964") beschrieben.

Bevorzugte andere Diphenole sind beispielsweise:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (VII) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan.

Insbesondere ist 2,2-Bis-(4-hydroxyphenyl)-propan bevorzugt.

Die anderen Diphenole können sowohl einzeln als auch im Gemisch eingesetzt werden.

Das molare Verhältnis von Diphenolen der Formel (I) zu den gegebenenfalls mitzuverwendenden anderen Diphenolen, beispielsweise denen der Formel (VII), soll von 100 Mol-% (I) zu 0 Mol-% anderem Diphenol bis 2 Mol-% (I) zu 98 Mol-% anderem Diphenol, vorzugsweise von 100 Mol% (I) zu 0 Mol% anderem Diphenol bis 5 Mol% zu 95 Mol% anderem Diphenol und insbesondere von 100 Mol% (I) zu 0 Mol% anderem Diphenol und ganz besonders von 100 Mol% (I) zu 0 Mol% anderem Diphenol bis 20 Mol% (I) zu 80 Mol% anderem Diphenol liegen.

Die hochmolekularen Polycarbonate aus den Diphenolen der Formel (I), gegebenenfalls in Kombination mit anderen Diphenolen können nach den bekannten Polycarbonatherstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn Verzweigung gewünscht wird, kann sie in bekannter Weise durch Einkondensieren geringer Mengen, vorzugsweise Mengen von 0,05 bis 2,0 Mol% (bezogen auf eingesetzte Diphenole), an drei-oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5'-methyl-benzyl-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan und
1,4-Bis-((4'-,4''-dihydroxytriphenyl)-methyl)-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate (a) dienen monofunktionelle Verbindungen in üblichen Konzentration. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (VIII) geeignet

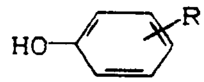

(VIII)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 is 8 Mol-%, bezogen auf eingesetzte Diphenole, eingesetzt.

Die Polycarbonate (a) können vorzugsweise durch Phasengrenzflächenpolyaddition (vgl. H. Schnell, "Chemistry and Physics of Polycarbonates", Polymer Reviews, Vol. IX, Seite 33 ff., Interscience Publ., 1964) in an sich bekannter Weise hergestellt werden. Hierbei werden die Diphenole der Formel (I) in wäßrig alkalischer Phase gelöst. Zur Herstellung von Co-Polycarbonaten mit anderen Diphenolen werden Gemische von Diphenolen der Formel (I) und den anderen Diphenolen, beispielsweise denen der Formel (VII), eingesetzt. Zur Regulierung des Molekulargewichtes können Kettenabbrecher z.B. der Formel (VIII) zugegeben werden. Dann wird in Gegenwart einer inerten, vorzugsweise Polycarbonat lösenden, organischen Phase mit Phosgen nach der Methode der Phasengrenzflächenpolykondensation umgesetzt. Die Reaktionstemperatur liegt zwischen 0° C und 40°C.

Die gegebenenfalls mitverwendeten Verzweiger (bevorzugt 0,05 bis 2 Mol-%) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (I) und gegebenenfalls anderen Diphenolen (VII) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (I) und gegebenenfalls Formel (VII); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate (a) durch Phasengrenzflächenpolykondensation kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,5 bis 10 Mol-%, bezogen auf Mole an eingesetzten Diphenolen eingesetzt werden. Die Katalysatoren können vor Beginn der Phosgenierung oder während oder auch nach der Phosgenierung zugesetzt werden.

Die Polycarbonate (a) können auch nach dem bekannten Verfahren in homogener Phase, dem sogenannten "Pyridinverfahren" sowie nach dem bekannten Schmelzumesterungsverfahren unter Verwendung von beispielsweise Diphenylcarbonate anstelle von Phosgen hergestellt werden.

Die Polycarbonate (a) haben bevorzugt Molekulargewichte $\overline{M}w$ (Gewichtsmittel, ermittelt durch Gelchromatographie nach vorheriger Eichung) von mindestens 10 000, besonders bevorzugt von 10 000 bis 300 000 und soweit die Polycarbonate zur Herstellung von Spritzgußartikeln verwendet werden insbesondere von 20 000 bis 80 000. Sie können linear oder verzweigt sein, sie sind Homopolycarbonate oder Copolycarbonate auf Basis der Diphenole der Formel (I).

Polycarbonate (a) im Sinne der Erfindung sind somit hochmolekulare, thermoplastische, aromatische Polycarbonate mit $\overline{M}w$ (Gewichtsmittelmolekulargewichten) von mindestens 10 000, vorzusweise von 10 000 bis 300 000 und soweit die Polycarbonate zur Herstellung von Spritzgußartikeln verwendet werden insbesondere von 20 000 bis 80 000, die bifunktionelle Carbonatstruktureinheiten der Formel (Ia)

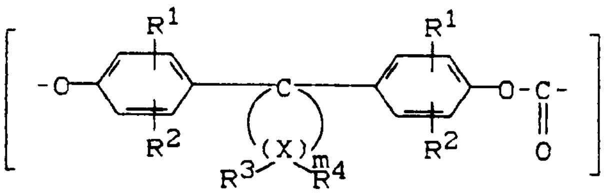 (Ia)

worin
X, $R^1$, $R^2$, $R^3$, $R^4$ und m die für die Formel (I) genannte Bedeutung haben,
in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders 100 Mol-% bis 20 Mol-%, bezogen jeweils auf die Gesamtmenge von 100 Mol-% an difunktionellen Carbonatstruktureinheiten im Polycarbonat enthalten.

Die Polycarbonate enthalten somit jeweils zu 100 Mol-% komplementäre Mengen an anderen difunktionellen Carbonatstuktureinheiten, beispielsweise solchen der Formel (VIIa)

$$\left[ -O-Z-O-\underset{\underset{O}{\|}}{C}- \right] \quad (VIIa),$$

also in Mengen von 0 Mol-% (einschließlich) bis 98 Mol-% einschließlich, vorzugsweise von 0 Mol-% bis 95 Mol-% und insbesondere von 0 Mol-% bis 90 Mol-% und ganz besonders bevorzugt 0 Mol-% bis 80 Mol-%, bezogen jeweils auf die Gesamtmenge von 100 Mol-% an difunktionellen Carbonatstruktureinheiten im Polycarbonat. [-Z- in Formel (VIIa) entspricht dem -Z- in Formel (VII)].

Durch den Einbau der Diphenole der Formel (I) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole (I), in denen m 4 oder 5 ist, und ganz besonders für die Polycarbonate auf Basis der Diphenole (Ib)

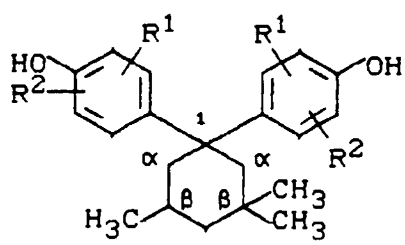 (Ib),

worin
$R^1$ und $R^2$ unabhängig voneinander die für Formel (I) genannte Bedeutung haben und besonders bevorzugt Wasserstoff sind.

Die bevorzugten Polycarbonate (a) sind solche, in denen in den Struktureinheiten der Formel (Ia) m = 4 oder 5 ist und ganz besonders solche aus Einheiten der Formel (Ic)

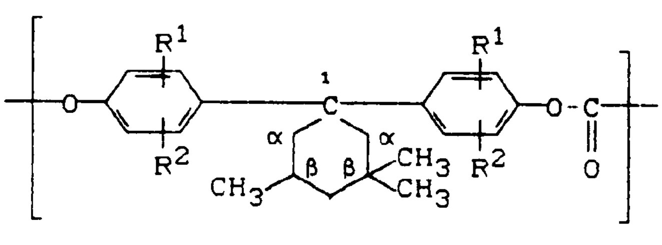 (Ic)

worin

$R^1$ und $R^2$ die für Formel (Ia) genannte Bedeutung haben, besonders bevorzugt aber Wasserstoff sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch die beliebige Kombination mit anderen Diphenolen, insbesondere mit denen der Formel (VII) lassen sich zudem die Polycarbonateigenschaften in günstiger Weise variieren.

In den folgenden Beispielen B.1 bis B.5 wird die Herstellung von Polycarbonaten (a) erläutert. Die relative Viskosität ist gemessen an 0,5 gew.-%igen Lösungen der Polycarbonate in $CH_2Cl_2$.

Die Einfriertemperatur oder Glastemperatur wird gemessen durch Differential Scanning Calorimetry (DSC).

Beispiel B.1

31.0 g (0,1 Mol) des Diphenols gemäß Beispiel (A.1), 33,6 g (0,6 Mol) KOH und 560 g Wasser werden in einer Inertgas-Atmosphäre unter Rühren gelöst. Dann fügt man eine Lösung von 0,188 g Phenol in 560 ml Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpyridin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,259.

Die Glastemperatur des Polymers wurde zu 233°C bestimmt (DSC).

Beispiel B.2

68,4 g (0,3 Mol) Bisphenol A (2,2-Bis-(4-hydroxyphenyl)-propan, 217,0 g (0,7 Mol) Diphenol gemäß Beispiel (A.1), 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,336.

Die Glastemperatur des Polymers wurde zu 212°C bestimmt (DSC).

Beispiel B.3

Wie in Beispiel B.2 wurde eine Mischung aus 114 g (0,5 Mol) Bisphenol A und 155 g (0,5 Mol) Diphenol gemäß Beispiel (A.1) zum Polycarbonat umgesetzt.

Das Polycarbonat zeigte eine relative Lösungsviskosität von 1,386.

Die Glastemperatur des Polymer wurde zu 195°C bestimmt (DSC).

Beispiel B.4

Wie in Beispiel B.2 wurde eine Mischung aus 159,6 g (0,7 Mol) Bisphenol A und 93 g (0,3 Mol) Diphenol gemäß Beispiel (A.3) zum Polycarbonat umgesetzt.

Das Polycarbonat zeigte eine relative Lösungsviskosität von 1,437.

Die Glastemperatur des Polymers wurde zu 180°C bestimmt (DSC).

Beispiel B.5

31.0 g (0,1 Mol) Diphenol gemäß Beispiel (A.3), 24,0 g (0,6 Mol) NaOH und 270 g Wasser werden in einer Inertgas-Atmosphäre unter Rühren gelöst. Dann fübt man eine Lösung von 0,309 g 4-(1,1,3,3-Tetramethylbutyl)-phenol in 250 ml Methylenchlorid zu. In die gut gerührte Lösung wurden bei pH 13 bis 14 und 21 bis 25°C 19,8 g (0,2 Mol) Phosgen eingeleitet. Danach wird 0,1 ml Ethylpiperidin zugegeben und noch 45 Min. gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,314.

Die Glastemperatur des Polymers wurde zu 234°C bestimmt (DSC).

Beispiel B.6

148,2 g (0,65 Mol) 2,2-Bis-(4-hydroxyphenyl)-propan, 108,5 g (0,35 Mol) Diphenol gemäß Beispiel (A.1.), 336,6 g (6 Mol) KOH werden in 2700 ml Wasser in einer Inertgasatmosphäre unter Rühren gelöst. Dann fügt man eine Lösung von 8,86 g 4-(1,1,3,3-Tetramethylbutyl)-phenol in 2500 ml Methylenchorid zu. In die gut gerührte Lösung werden bei pH 13-14 und 21-25°C 198 g (2 Mol) Phosgen eingeleitet. Danach wird 1 ml N-Ethylpiperidin zugegeben und noch 45 Minuten gerührt. Die bisphenolatfrei wäßrige Phase wird abgetrennt, die organische Phase nach Ansäuern mit Phosphorsäure mit Wasser neutral gewaschen und vom Lösungsmittel befreit. Das Polycarbonat zeigte eine rel. Lösungsviskosität von 1,20.

Beispiel B.7

3,875 kg (12,5 Mol) Bisphenol A.2 werden in 6,675 kg 45 %ige NaOH und 30 l Wasser in einer Inertgasatmosphäre unter Rühren gelöst. Dann werden 9,43 l Methylenchlorid, 11,3 l Chlorbenzol und 23,5 g Phenol zugegeben. In die gut gerührte Lösung werden bei pH 13-14 und 20-25°C 2,475 kg Phosgen eingeleitet. Nach Beendigung des Einleitens werden 12,5 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend elektrolytfrei gewaschen und vom Lösungsmittel befreit.
rel. Viskosität: 1,300
Glastemperatur: 238°C

Beispiel B.8

15,5 g (0,05 Mol) Bisphenol A.3, 13,4 g (0,05 Mol) Bis-(4-hydroxyphenyl)-cyclohexan (Bisphenol Z), 24,0 g (0,6 Mol) NaOH werden in 362 ml Wasser in einer Inertgasatmosphäre unter Rühren gelöst. Dann werden 0,516 g 4-(1,1,3,3-Tetramethylbutyl)phenol gelöst in 271 ml Methylenchlorid zugegeben. In die gut gerührte Lösung werden bei pH 13-14 und 20-25°C 19,8 g Phosgen eingeleitet. 5 Minuten nach Beendigung des Einleitens werden 0,1 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend neutral gewaschen und vom Lösungsmittel befreit.
rel. Viskosität: 1,297
Glastemperatur: 208°C

Beispiel B.9

15,5 (0,05 Mol) Bisphenol A.1, 17,6 g (0,05 Mol) 4,4′-Dihydroxytetraphenylmethan, 24,0 g (0,6 Mol) NaOH werden in 411 ml Wasser in einer Inertgasatmosphäre unter Rühren gelöst. Dann werden 0,516 g 4-(1,1,3,3-Tetramethylbutyl)phenol gelöst in 308 ml Methylenchlorid zugegeben. In die gut gerührte Lösung werden bei pH 13 bis 14 und 20-25°C 19,8 g Phosgen eingeleitet. 5 Minuten nach Beendigung des Einleitens werden 0,1 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend neutral gewaschen und vom Lösungsmittel befreit.
rel. Viskosität: 1,218
Glastemperatur: 212°C

Beispiel B.10

18,3 g (0,05 Mol) Bisphenol A.4, 23,6 g (0,42 Mol) KOH werden in 100 ml Wasser in einer Inertgasatmosphäre unter Rühren gelöst. Dann werden 100 ml Methylenchlorid zugegeben. In die gut gerührte Lösung werden bei pH 13 bis 14 und 20 bis 25°C 17,3 g Phosgen eingeleitet. 5 Minuten nach Beendigung des Einleitens werden 0,3 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend neutral gewaschen und vom Lösungsmittel befreit.
rel. Viskosität: 1,310
Glastemperatur: 241°C

Beispiel B.11

29,6 g (0,1 Mol) Bisphenol A.5, 24,0 g (0,6 Mol) NaOH werden in 370 ml Wasser in einer Inertgasatmosphäre unter Rühren gelöst. Dann werden 0,413 g 4-(1,1,3,3-Tetramethylbutyl)phenol gelöst in 277 ml Methylenchlorid zugegeben. In die gut gerührte Lösung werden bei pH 13 bis 14 und 20 bis 25°C 19,8 g Phosgen eingeleitet. 5 Minuten nach Beendigung des Einleitens werden 0,1 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend neutral gewaschen und vom Lösungsmittel befreit.
rel. Viskosität: 1,370
Glastemperatur: 193°C

Beispiel B.12

62,0 g (0,2 Mol) Bisphenol A.1, 182,4 g (0,8 Mol) Bisphenol A, 240 g (6 Mol) NaOH werden in 2400 ml Wasser in einer Intergasatmosphäre unter Rühren gelöst. Dann werden 6,603 g 4-(1,1,3,3-Tetramethylbutyl)phenol gelöst in 2400 ml Methylenchlorid zugegeben. In die gut gerührte Lösung werden bei pH 13-14 und 20-25°C 198 g Phosgen eingeleitet. 5 Minuten nach Beendigung des Einleitens wird 1 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend neutral gewaschen und von Lösungsmittel befreit.
rel. Viskosität: 1,298
Glastemperatur: 172°C

Beispiel B.13

170,5 g (0,55 Mol) Bisphenol A.3, 102,6 g (0,45 Mol) Bisphenol A, 240 g (6 Mol) NaOH werden in 2400 ml Wasser in einer Inertgasatmosphäre unter Rühren gelöst. Dann werden 5,158 g 4-(1,1,3,3-Tetramethylbutyl)-phenol gelöst in 2400 ml Methylenchlorid zugegeben. In die gut gerührte Lösung werden bei pH 13-14 und 20-25°C 198 g Phosgen eingeleitet. 5 Minuten nach Beendigung des Einleitens wird 1 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend neutral gewaschen und vom Lösungsmittel befreit.
rel. Viskosität: 1,302
Glastemperatur: 203°C

Beispiel B.14

108,5 g (0,35 Mol) Bisphenol A.1, 148,2 g (0,65 Mol) Bisphenol A, 240 g (6 Mol) NaOH werden in 2400 ml Wasser in einer Inertgasatmosphäre unter Rühren gelöst. Dann werden 6,189 g 4-(1,1,3,3-Tetramethylbutyl)phenol gelöst in 2400 ml Methylenchlorid zugegeben. In die gut gerührte Lösung werden bei pH 13 bis 14 und 20 bis 25°C 198 g Phosgen eingeleitet. 5 Minuten nach Beendigung des Einleitens wird 1 ml N-Ethylpiperidin zugegeben. Man läßt 45 min. nachreagieren. Die bisphenolatfreie wäßrige Phase wird abgetrennt, die organische Phase mit Phosphorsäure angesäuert und anschließend neutral gewaschen und vom Lösungsmittel befreit.
rel. Viskosität: 1,305
Glastemperatur: 185°C

Zur Abschätzung des UV-Beständigkeit der neuen Polycarbonate wurde die Primärradikalbildung bei UV-Bestrahlung mit einer Quecksilberdampflampe (Kantenfilter 305 nm) im Vergleich zu einem Polycarbonat auf Basis des 2,2-Bis-(4-hydroxyphenyl)-propans bestimmt. Es zeigte sich, daß das Polycarbonat gemäß Beispiel B1 eine geringere Primärradikalbildungsrate und daher eine höhere UV-Beständigkeit aufweist.

Gegenstand der vorliegenden Erfindung sind Mischungen enthaltend

a) 0,1 Gew.-% bis 99,9 Gew.-%, vorzugsweise 1 Gew.-% bis 98 Gew.-% und insbesondere 2,5 Gew.-% bis 90 Gew.-%,

hochmolekulare, thermoplastische, aromatische Polycarbonate mit $\overline{M}w$ (Gewichtsmittelmolekulargewichten) von mindestens 10 000, vorzusweise von 10 000 bis 300 000 und, soweit die Mischungen zur Herstellung von Spritzgußartikeln verwendet werden, insbesondere von 20 000 bis 80 000, die bifunktionelle Carbonatstruktureinheiten der Formel (Ia)

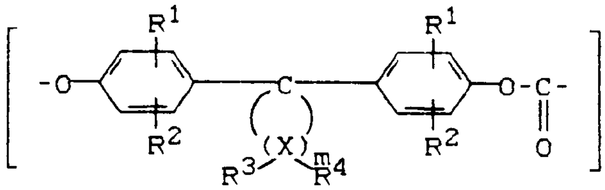

(Ia)

worin
X, $R^1$, $R^2$, $R^3$, $R^4$ und m die für Formel (I) genannte Bedeutung haben,
in Mengen von 100 Mol-% bis 2 Mol-%, vorzugsweise von 100 Mol-% bis 5 Mol-% und insbesondere von 100 Mol-% bis 10 Mol-% und ganz besonders 100 Mol-% bis 20 Mol-%, neben der zu 100 Mol-% komplementären Menge anderer difunktioneller Carbonatstruktureinheiten enthalten,
b) 99,9 Gew.-% bis 0,1 Gew.-%, vorzugsweise 99 Gew.-% bis 2 Gew.-% und insbesondere 97,5 Gew.-% bis 10 Gew.-%, an Elastomeren oder an anderen Thermoplasten als den Polycarbonaten der Komponente a).

Besonders geeignete Polycarbonate (a) sind solche, in denen in den Struktureinheiten der Formel (Ia) m = 4 oder 5 ist und ganz besonders solche mit Struktureinheiten der Formel (Ic)

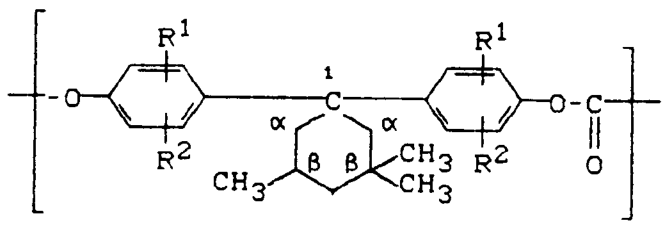

(Ic)

worin
$R^1$ und $R^2$ die für Formel (Ia) genannte Bedeutung haben, besonders bevorzugt aber Wasserstoff sind.

Als Komponente (b) geeignete andere Thermoplasten in den erfindungsgemäßen Mischungen sind sowohl

b1) amorphe Thermoplaste, vorzugsweise solche mit einer Glastemperatur von mehr als 40°C, insbesondere von 60°C bis 220°C, als auch

b2) teilkristalline Thermoplaste, vorzugsweise solche mit einer Schmelztemperatur von mehr als 60°C, insbesondere von 80°C bis 400°C.

Elastomere für die Komponenten b) der erfindungsgemäßen Mischungen sind

b3) solche Polymere, die eine Glastemperatur von unter 0°C, vorzugsweise von unter -10°C und insbesondere von -15°C bis -140°C, haben.

Beispiele für andere amorphe Thermoplasten b1) sind amorphe Polymere aus der Klasse der Polycarbonate, Polyester, Polyestercarbonate, Polyamide, Polyolefine, Polysulfone, Polyketone, thermoplastische Vinylpolymerisate wie Polymethylacrylsäureester oder Homopolymerisate von Vinylaromaten, Copolymerisate von Vinylaromaten oder Pfropfpolymerisate von Vinylmonomeren auf Kautschuke, Polyether, Polyimide und thermoplastische Polyurethane.

Beispiele für kristalline Thermoplasten b2) sind aliphatische Polyester, Polyarylensulfide sowie die teilkristallinen Vertreter der vorstehend unter b1) subsummierten Thermoplasten.

Beispiele für Elastomere b3) sind die verschiedensten Kautschuke wie Ethylen-Propylen-Kautschuk, Polyisopren, Polychloropren, Polysiloxane, ataktisches Polypropylen, Dien-, Olefin- und Acrylatkautschuke und Naturkautschuke, Styrol-Butadien-Blockcopolymere, Ethylen-Copolymerisate mit Vinylacetat oder mit (Meth)acrylsäureestern, elastische Polyurethane soweit nicht als Thermoplasten unter b1) oder b2) subsummiert und elastische Polycarbonat-Polyether-Blockcopolymere.

Amorphe Thermoplasten $b_1$) sind insbesondere andere Polycarbonate als die der deutschen Patentanmeldung P 3 832 396.6. Diese andere Polycarbonate können sowohl Homopolycarbonate als auch Copolycarbonate sein, sie können sowohl linear als auch verzweigt sein. Besonders bevorzugtes Bisphenol für die anderen thermoplastischen Polycarbonate der Komponente b) der erfindungsgemäßen Mischungen ist Bisphenol-A [=

2,2-Bis-(4-hydroxyphenyl)-propan].

Diese anderen thermoplastischen Polycarbonate sind bekannt.

Die Molekulargewichte $\overline{M}w$ (Gewichtsmittelmolekulargewicht, ermittelt nach der Gelpermeationschromatographie in Tetrahydrofuran) der anderen thermoplastischen Polycarbonate liegen zwischen 10.000 und 300.000, vorzugsweise zwischen 12.000 und 150.000.

Die anderen thermoplastischen Polycarbonate sind sowohl allein als auch im Gemisch für die Komponente b) der erfindungsgemäßen Mischungen verwendbar.

Bevorzugte andere Thermoplasten für die Komponente b) zur Herstellung der erfindungsgemäßen Mischungen sind auch aliphatische, thermoplastische Polyester, besonders bevorzugt Polyalkylenterephthalate, also beispielsweise solche auf Basis von Ethylenglykol, Propandiol-1,3, Butandiol-1,4, Hexandiol-1,6 und 1,4-Bis-hydroxymethylcyclohexan.

Die Molekulargewichte ($\overline{M}w$) dieser Polyalkylenterephthalate liegen zwischen 10.000 und 80.000. Die Polyalkylenterephthalate können nach bekannten Verfahren beispielsweise aus Terephthalsäuredialkylester und dem entsprechenden Diol durch Umesterung erhalten werden (s. z. B. US-Patente 2 647 885, 2 643 989, 2 534 028, 2 578 660, 2 742 494, 2 901 466).

Diese Polyester sind bekannt.

Weiterhin bevorzugte andere Thermoplasten sind thermoplastische Polyamide.

Es eignen sich alle teilkristallinen Polyamide, insbesondere Polyamid-6, Polyamid-6,6 und teilkristalline Copolyamide auf Basis dieser beiden Komponenten. Weiterhin kommen teilkristalline Polyamide in Betracht, deren Säurekomponente insbesondere ganz oder teilweise Adipinsäure beziehungsweise Caprolactam aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Tetramethylendiamin und/oder Hexamethylendiamin und/oder 2,2,4-und/oder 2,4,4-Trimethylhexamethylendiamin und/oder Isophorondiamin bestehen und deren Zusammensetzungen im Prinzip aus dem Stand der Technik bekannt sind (siehe beispielsweise Encyclopedie of Polymers, Vol. 11, S. 315 ff).

Außerdem sind geeignet teilkristalline Polyamide, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide sind Polyamid-6 und Polyamid-6,6 oder Copolyamide mit geringem Anteil, bis etwa 10 Gewichtsprozent an anderen Co-Komponenten.

Geeignete Polyamide sind auch amorphe Polyamide, erhalten beispielsweise durch Polykondensation von Diaminen, wie beispielsweise von Hexamethylendiaminen, Decamethylendiamin, 2,2,4- beziehungsweise 2,4,4-Trimethylhexamethylendiamin, m- beziehungsweise p-Xylylendiamin, Bis-(4-aminocyclohexyl)-methan, Gemischen aus 4,4′- und 2,2′-Diaminodicyclohexylmethanen, 2,2-Bis-(4-aminocyclohexyl)-propan, 3,3′-Dimethyl-4,4′-diamino-dicyclohexylmethan, 3-Aminoethyl-3,5,5-trimethyl-cyclohexylamin, 2,5-Bis-(aminomethyl)-norbornan, 2,6-Bis-(aminomethyl)-norbornan, 1,4-Diamino-methylcyclohexan und von beliebigen Gemischen dieser Diamine, mit Dicarbonsäuren wie beispielsweise mit Oxalsäure, Adipinsäure, Azelainsäure, Decandicarbonsäure, Heptadecandicarbonsäure, 2,2,4-Trimethyladipinsäure, 2,4,4-Trimethyladipinsäure, Isophthalsäure und Terephthalsäure und mit beliebigen Gemischen dieser Dicarbonsäuren. Es sind somit auch amorphe Copolyamide einbezogen, die durch Polykondensation mehrerer der vorstehend genannten Diamine und/oder Dicarbonsäuren erhalten werden. Ferner sind amorphe Copolyamide einbezogen, die unter Mitverwendung von ω-Aminocarbonsäuren wie ω-Aminocapronsäure, ω-Aminoundecansäure oder ω-Aminolaurinsäure oder von deren Lactamen hergestellt sind. Besonders geeignete, amorphe, thermoplastische Polyamide sind solche, die aus Isophthalsäure, Hexamethylendiamin und weiteren Diaminen wie 4,4′-Diaminodicyclohexylmethan, Isophorondiamin, 2,2,4- beziehungsweise 2,4,4-Trimethylhexamethylendiamin, 2,5- und/oder 2,6-Bis-(aminomethyl)-norbornan erhältlich sind, solche, die aus Isophthalsäure, 4,4′ -Diamino-di-cyclohexylmethan und ω-Caprolactam erhältlich sind, solche, die aus Isophthalsäure, 3,3-Dimethyl-4,4′-diamino-dicyclohexylmethan und ω-Laurinlactam erhältlich sind, und solche, die aus Terephthalsäure und dem Isomerengemisch aus 2,2,4- und 2,4,4-Trimethylhexamethylendiamin erhältlich sind.

Anstelle des reinen 4,4′-Diaminodicyclohexylmethans können auch Gemische der stellungsisomeren Diaminodicyclohexylmethane eingesetzt werden, die sich zusammensetzen aus

70 bis 99 Mol-% des 4,4′-Diaminoisomeren

1 bis 30 Mol-% des 2,4′-Diaminoisomeren

0 bis 2 Mol-% des 2,2′-Diaminoisomeren

und gegebenenfalls entsprechend höherkondensierten Diaminen, die durch Hydrierung von Diaminodiphenylmethan technischer Qualität erhalten werden.

Geeignete thermoplastische Polyamide können auch aus Mischungen von teilkristallinen und amorphen Polyamiden bestehen, wobei vorzugsweise der Anteil an amorphem Polyamid unter dem Anteil an teilkristallinem Polyamid liegt. Auch die amorphen Polyamide und deren Herstellung sind aus dem Stand der Technik bekannt (siehe beispielsweise Ullmann, Enzyklopädie d. technischen Chemie, Band 19, S. 50).

Bevorzugte andere Thermoplasten D) sind auch sogenannte "LC-Polymere". Als LC-Polymere werden Polymere bezeichnet, die flüssigkristalline Schmelzen bilden können. Derartige Polymere, die auch als "thermotrop" bezeichnet werden, sind hinreichend bekannt (siehe beispielsweise EP-OS 0 131 846, EP-OS 0 132 637 und EP-OS 0 134 959). In den genannten Literaturstellen ist weitere Literatur angezogen und darüber hinaus die Ermittlung des flüssigkristallinen Zustandes von Polymerschmelzen beschrieben.

"LC-Polymere" sind beispielsweise aromatische Polyester auf Basis von gegebenenfalls substituierter p-Hydroxybenzoesäure, gegebenenfalls substituierten Iso- und/oder Terephthalsäuren, 2,7-Dihydroxynaphthalin und anderen Diphenolen (EP-OS 0 131 846), aromatische Polyester auf Basis von gegebenenfalls substituierter p-Hydroxybenzoesäure, Diphenolen, Kohlensäure und gegebenenfalls aromatischen Dicarbonsäuren (EP-OS 0 132 637) und aromatischer Polyester auf Basis von gegebenenfalls substituierter p-Hydroxybenzoesäure, 3-Chlor-4-hydroxybenzoesäure, Isophthalsäure, Hydrochinon und 3,4′-und/oder 4,4′-Dihydroxydiphenyl, 3,4′- und/oder 4,4′-Dihydroxydiphenylether und/oder 3,4′- und/oder 4,4′-Dihydroxydiphenylsulfid (EP-OS 0 134 959).

Die LC-Polymere haben eine Persistenzlänge bei Zimmertemperatur zwischen 18 und 1300 Å, bevorzugt zwischen 25 und 300 Å, insbesondere zwischen 25 und 150 Å.

Die Persistenzlänge eines Polymeren bei Zimmertemperatur charakterisiert die mittlere Verknäuelung einer Molekülkette in einer verdünnten Lösung unter Theta-Bedingungen (vgl. z.B. P.J. Flory, "Principles of Polymer Chemistry", Cornell Univ. Press, Ithaca, New York) und die Hälfte der Kuhnschen Schrittlänge. Die Persistenzlänge kann mit verschiedenen Methoden in verdünnten Lösungen bestimmt werden, z.B. durch Lichtstreuung und Röntgenkleinwinkel-Messungen. Man kann nach geeigneter Präparation die Persistenzlänge auch mit Hilfe der Neutronenkleinwinkelstreuung im Festkörper bestimmen. Weitere theoretische und experimentelle Methoden sind z.B. von J.H. Wendorff in "Liquid Crystalline Order in Polymers", e.g. A. Blumstein, Academic Press 1978, S. f 16 ff sowie in den in "S.M. Aharoni, Macromolecules 19, (1986), S. 429 ff" angegebenen Referenzen beschrieben.

Bevorzugte andere Thermoplasten sind auch aromatische Polyestercarbonate.

Erfindungsgemäß als Thermoplast b) einsetzbare aromatische Polyester und Polyestercarbonate sind aus mindestens einem aromatischen Bisphenol, z.B. der Formel (VII), aus mindestens einer aromatischen Dicarbonsäure und gegebenenfalls aus Kohlensäure aufgebaut. Geeignete aromatische Dicarbonsäuren sind beispielsweise Orthophthalsäure, Terephthalsäure, Isophthalsäure, tert.-Butylisophthalsäure, 3,3′-Diphenyldicarbonsäure, 4,4′-Diphenyldicarbonsäure, 4,4′-Benzophenondicarbonsäure, 3,4′-Benzophenondicarbonsäure, 4,4′-Diphenyletherdicarbonsäure, 4,4′-Diphenylsulfondicarbonsäure, 2,2-Bis-(4-carboxyphenyl)-propan, Trimethyl-3-phenylindan-4,5′-dicarbonsäure.

Von den aromatischen Dicarbonsäuren werden besonders bevorzugt die Terephthalsäure und/oder Isophthalsäure eingesetzt.

Aromatische Polyester und Polyestercarbonate können nach Verfahren hergestellt werden, wie sie für die Polyester-bzw. Polyestercarbonat-Herstellung aus der Literatur bekannt sind, so z.B. nach Verfahren in homogener Lösung, nach Schmelzumesterungsverfahren und nach dem Zweiphasengrenzflächenverfahren. Bevorzugt werden Schmelzumesterungsverfahren und insbesondere das Zweiphasengrenzflächenverfahren angewandt.

Schmelzumesterungsverfahren (Acetatverfahren und Phenylesterverfahren) werden beispielsweise in den US-PS 3 494 885, 4 386 186, 4 661 580, 4 680 371 und 4 680 372, den EP-A 26 120, 26 121, 26 684, 28 030, 39 845, 91 602, 97 970, 79 075, 146 887, 156 103, 234 913, 234 919 und 240 301 sowie den DE-A 1 495 626, 2 232 977 beschrieben. Das Zweiphasengrenzflächenverfahren wird beispielsweise beschrieben in den EP-A 68 014, 88 322, 134 898, 151 750, 182 189, 219 708, 272 426, in DE-OS 2 940 024, 3 007 934, 3 440 020 und in Polymer Reviews, Volume 10, "Condensation Polymers by Interfacial and Solution Methods", Paul W. Morgan, Interscience Publishers, New York 1965, Kap. VIII, S. 325, Polyester.

Beim Acetatverfahren werden im allgemeinen Bisphenoldiacetat bzw. beim Phenylesterverfahren werden im allgemeinen Bisphenol, aromatische Dicarbonsäure oder Diphenylester der aromatischen Dicarbonsäure und gegebenenfalls Diphenylcarbanat unter Phenolabspaltung und gegebenenfalls $CO_2$-Abspaltung zum Polyester bzw. Polyestercarbonat umgesetzt. Beim Zweiphasengrenzflächenververfahren dienen als Ausgangsstoffe zur Herstellung von Polyestern und Polyestercarbonaten, im allgemeinen Alkalibisphenolat, aromatisches Dicarbonsäuredichlorid und gegebenenfalls Phosgen. Bei dieser Kondensationsreaktion werden der Polyester bzw. das Polyestercarbonat unter Alkalichloridbildung hergestellt. Im allgemeinen ist das gebildete Salz in der wäßrigen Phase gelöst, währende der gebildete Polyester bzw. das gebildete Polyestercarbonat in der organischen Phase gelöst vorliegt und daraus isoliert wird.

Bevorzugte andere Thermoplasten b) sind auch thermoplastische lineare oder verzweigte Polyarylensulfide. Sie haben Struktureinheiten der allgemeinen Formel

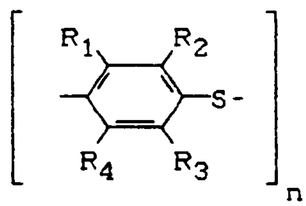

wobei $R_1$ bis $R_4$ unabhängig oder gleich sein können und $C_1$-$C_6$-Alkyl, Phenyl oder Wasserstoff sind. Weiterhin können die Polyarylensulfide auch Diphenyl-Einheiten enthalten.

Polyarylensulfide und ihre Herstellung sind bekannt (siehe beispielsweise US-PS 33 54 129 und EP-OS 0 171 021).

Bevorzugte andere Thermoplasten b) sind thermoplastische Polyarylensulfone.

Geeignete Polyarylensulfone haben mittlere Gewichtsmittelmolekulargewichte $\overline{M}w$ (gemessen nach der Lichtstreumethode in $CHCl_3$) zwischen 1.000 und 200.000, vorzugsweise zwischen 20.000 und 60.000. Beispiele dafür sind die nach bekannten Verfahren erhältlichen Polyarylensulfone aus 4,4′-Dichlordiphenylsulfon und einem Bisphenol, insbesondere 2,2-Bis-(4-hydroxyphenyl)-propan, mit mittleren Gewichtsmittelmolekulargewichten $\overline{M}w$ von 2.000 bis 200.000.

Diese Polyarylensulfone sind bekannt (siehe beispielsweise US-PS 3 264 536, DE-AS 1 794 171, GB-PS 1 264 900, US-PS 3 641 207, EP-A-00 38 028, DE-OS 3 601 419 und DE-OS 3 601 420). Die geeigneten Polyarylensulfone können auch in bekannter Weise verzweigt sein (siehe beispielsweise DE-OS 2 305 413).

Bevorzugte andere Thermoplasten b) sind auch thermoplastische Polyphenylenoxide, vorzugsweise Poly-(2,6-dialkyl-1,4-phenylenoxide). Erfindungsgemäß geeignete Polyphenylenoxide haben Gewichtsmittelmolekulargewichte $\overline{M}w$ (gemessen nach der Lichtstreumethode in Chloroform) zwischen 2.000 und 100.000, vorzugsweise zwischen 20.000 und 60.000. Diese Polyphenylenoxide sind bekannt.

Die bevorzugten Poly-(2,6-di-alkyl-1,4-phenylenoxide) können nach bekannten Verfahren durch oxydierende Kondensation von 2,6-Dialkylphenolen mit Sauerstoff in Anwesenheit von Katalysatorkombinationen aus Kupfersalzen und tertiären Aminen erhalten werden (siehe beispielsweise DE-OS 2 126 434 und US-PS 3 306 875).

Geeignete Poly-(2,6-dialkyl-1,4-phenylenoxide) sind insbesondere die Poly-[2,6-di($C_1$-$C_4$-alkyl)-1,4-phenylenoxide] wie beispielsweise Poly-(2,6-dimethyl-1,4-phenylenoxid).

Bevorzugte andere Thermoplasten b) sind auch aromatische Polyetherketone (siehe beispielsweise GB-PS 1 078 234, US-PS 4 010 147 und EP-OS 0 135 938).

Sie enthalten das wiederkehrende Strukturelement

-O-E-O-E′-,

worin -E′- der zweibindige Rest eines Bisarylketons und -O-E-O- ein zweibindiger Diphenolat-Rest ist.

Sie können beispielsweise gemäß GB-PS 1 078 234 aus Dialkalidiphenolaten der Formel Alkali-O-E-O-Alkali und Bis-(halogenaryl)-ketonen der Formel Hal-E′-Hal (mit Hal = Halogen) hergestellt werden. Ein geeignetes Dialkalidiphenolat ist z. B. das des 2,2-Bis-(4-hydroxyphenyl)-propans, ein geeignetes Bis-(halogenaryl)-keton ist das 4,4′-Dichlorbenzophenon.

Bevorzugte andere Thermoplasten b) sind auch thermoplastische Vinyl-Polymerisate.

Vinyl-Polymerisate im Sinne dieser Erfindung sind Homopolymerisate von Vinylverbindungen, Copolymerisate von Vinylverbindungen und Pfropfpolymerisate von Vinylverbindungen auf Kautschuke.

Erfindungsgemäß geignete Homopolymerisate und Copolymerisate sind solche von Styrol, α-Methylstyrol, Acrylnitril, Methacrylnitril, $C_1$-$C_{12}$-(Cyclo)-Alkyl-Estern der (Meth)Acrylsäure, $C_1$-$C_4$-Carbonsäure-Vinylester, wobei die Copolymerisate aus Mischungen dieser Vinyl-Verbindungen nach bekannten Methoden erhältlich sind.

Die Homo- beziehungsweise Copolymerisate sollen Grenzviskositäten (Staudinger-Indices) zwischen 0,3 und 1,5 dl/g (gemessen bei 23°C in Toluol in bekannter Weise) haben.

Geeignete Vinylpolymerisate sind beispielsweise thermoplastische Poly-$C_1$-$C_4$-alkylmethacrylate, beispielsweise solche des Methyl-, Ethyl-, Propyl- oder Butylmethacrylsäureesters, vorzugsweise des Methyl- oder Ethyl-methacrylsäureesters. Es sind sowohl Homopolymerisate als auch Copolymerisate dieser Methacrylsäureester darunter zu verstehen. Darüber hinaus können andere, ethylenisch ungesättigte copolymerisierbare Monomere wie beispielsweise (Meth)acrylnitril, (α-Methyl)-Styrol, Bromstyrol, Vinylacetat, Acrylsäure-$C_1$-$C_8$-alkylester, (Meth)Acrylsäure, Ethylen, Propylen und N-Vinylpyrrolidon in untergeordneten Mengen einpolymerisiert sein.

Die erfindungsgemäß geeigneten thermoplastischen Poly-$C_1$-$C_4$-alkyl-methacrylate sind literaturbekannt oder nach literaturbekannten Verfahren erhältlich.

Geeignete Vinylpolymerisate sind auch Copolymerisats aus Styrol oder α-Methylstyrol und Acrylnitril, die gegebenenfalls bis zu 40 Gew.-% Ester der Acrylsäure oder Methacrylsäure, insbesondere Methylmethacrylat oder n-Butylacrylat enthalten. Styrolderivate müssen auf jeden Fall als Monomere enthalten sein. Die Styrolderivate sind dabei in Anteilen zwischen 100 und 10 Gew.-% bevorzugt zwischen 90 bis 20 Gew.-%, besonders bevorzugt zwischen 80 bis 30 Gew.-%, enthalten, die nach üblichen Verfahren wie radikalische Polymerisation in Masse, Lösung, Suspension oder Emulsion, bevorzugt aber durch radikalische Emulsionspolymerisation in Wasser erhalten werden.

Geeignete Pfropfpolymerisate entstehen durch Polymerisation der oben genannten Vinylmonomeren oder Vinylmonomerengemischen in Gegenwart von Kautschuken mit Glastemperaturen < 0°C, vorzugsweise < -20°C. Die Pfropfpolymerisate enthalten in der Regel 1 bis 85 Gew.-%, bevorzugt 10 bis 80 Gew.-%, Kautschuk. Die Pfropfpolymerisate lassen sich durch übliche Verfahren in Lösung, Masse oder Emulsion, bevorzugt in Emulsion, herstellen, wobei Vinylmonomerengemische simultan oder sukzessive pfropfpolymerisiert werden können.

Geeignete Kautschuke sind vorzugsweise Dienkautschuke und Acrylatkautschuke.

Dienkautschuke sind beispielsweise Polybutadien, Polyisopren und Copolymerisate von Butadien mit bis zu 35 Gew.-% Comonomeren wie Styrol, Acrylnitril, Methylmethacrylat und $C_1$-$C_6$-Alkylacrylaten.

Acrylatkautschuke sind beispielsweise vernetzte, teilchenförmige Emulsionspolymerisate aus $C_1$-$C_6$-Alkylacrylaten, insbesondere $C_2$-$C_6$-Alkylacrylaten, gegebenenfalls im Gemisch mit bis zu 15 Gew.-% anderen, ungesättigten Monomeren wie Styrol, Methylmethacrylat, Butadien, Vinylmethylether, Acrylnitril, und aus wenigstens einem polyfunktionellem Vernetzer wie beispielsweise Divinylbenzol, Glykol-bis-acrylate, Bisacrylamide, Phosphorsäuretriallylester, Zitronensäuretriallylester, Allylester von Acrylsäure und Methacrylsäure, Triallylisocyanurat, wobei die Acrylatkautschuke bis zu 4 Gew.-% der vernetzenden Comonomere enthalten können.

Zur Herstellung der Pfropfpolymerisate sind auch Gemische von Dien- mit Acrylatkautschuken sowie Kautschuke mit einer Kern-Mantel-Struktur geeignet.

Die Kautschuke müssen zur Pfropfpolymerisation in Form diskreter Teile vorliegen, z. B. als Latex. Diese Teilchen haben i.a. mittlere Durchmesser von 10 nm bis 2.000 nm.

Die Pfropfpolymerisate können nach bekannten Verfahren, beispielsweise durch radikalische Emulsionspfropfpolymerisation der Vinylmonomeren in Gegenwart von Kautschuklatices bei Temperaturen von 50 bis 90°C unter Verwendung wasserlöslicher Initiatoren wie Peroxodisulfat oder mit Hilfe von Redoxinitiatoren, erzeugt werden.

Bevorzugt sind radikalisch hergestellte Emulsionspfropfpolymerisate auf teilchenförmige, hochvernetzte Kautschuke (Dien- oder Alkylacrylatkautschuke) mit Gelgehalten > 80 Gew.-% und mittleren Teilchendurchmessern (d50) von 80 bis 800 nm.

Besonders geeignet sind technisch gebräuchliche ABS-Polymerisate.

Mischungen von Vinyl-Homopolymerisaten und/oder Vinyl-Copolymerisaten mit Pfropfpolymerisaten sind ebenfalls geeignet.

Bevorzugte andere Thermoplasten b) sind auch thermoplastische Polyurethane. Dies sind Reaktionsprodukte aus Diisocyanaten, ganz oder überwiegend aliphatischen Oligo-und/oder Polyestern und/oder -ethern sowie einem oder mehreren Kettenverlängerern. Diese thermoplastischen Polyurethane sind im wesentlichen lienar und besitzen thermoplastische Verarbeitungscharakteristiken.

Die thermoplastischen Polyurethane sind bekannt oder können nach bekannten Verfahren (siehe beispielsweise US-PS 3 214 411, J.H. Saunders und K.C. Frisch, "Polyurethanes, Chemistry and Technology", Vol. II, Seiten 299 bis 451, Interscience Publishers, New York, 1964 und Mobay Chemical Coporation, "A Processing Handbook for Texin Urethane Elastoplastic Materials", Pittsburgh, PA) hergestellt werden.

Ausgangsmaterialien zur Herstellung der Oligoester und Polyester sind beispielsweise Adipinsäure, Bernsteinsäure, Subecinsäure, Sebacinsure, Oxalsäure, Methyladipinsäure, Glutarsäure, Pimelinsäure, Azelainsäure, Phthalsäure, Terephthalsäure und Isophthalsäure.

Adipinsäure ist hierbei bevorzugt.

Als Glykole zur Herstellung der Oligoester und Polyester kommen beispielsweise Ethylenglykol, 1,2- und 1,3-Propylenglykol, 1,2-, 1,3-, 1,4-, 2,3-, 2,4-Butandiol, Hexandiol, Bishydroxymethylcyclohexan, Diethylenglykol und 2,2-Diemthyl-propylenglykol in Betracht. Darüberhinaus können gemeinsam mit den Glykolen kleine Mengen, bis zu 1 Mol-%, tri- oder höher funktionelle Alkohole, z.B. Trimethylolpropan, Glycerin, Hexantriol usw.

eingesetzt werden.

Die resultierenden Hydroxyl-oligo-oder -polyester haben ein Molekulargewicht von wenigstens 600, eine Hydroxylzahl von ca. 25 bis 190, vorzugsweise ca. 40 bis 150, eine Säurezahl von ca. 0,5 bis 2 und einen Wassergehalt vo ca. 0,01 bis 0,2 %.

Oligoester bzw. Polyester sind auch oligomere oder polymere Lactone, wie beispielsweise Oligo-caprolacton oder Poly-caprolacton, und aliphatische Polycarbonate, wie beispielsweise Poly-butandiol-(1,4)-carbonat oder Polyhexandiol-(1,6)-carbonat.

Ein besonders geeigneter Oligorest, der als Ausgangsmaterial für die thermoplastischen Polyurethane verwendet werden kann, wird aus Adipinsäure und einem Glykol hergestellt, das wenigstens eine primäre Hydroxylgruppe besitzt. Die Kondensation wird beendet, wenn eine Säurezahl von 10, vorzugsweise ca. 0,5 bis 2 erreicht ist. Das während der Reaktion entstehende Wasser wird damit gleichzeitig oder hinterher abgetrennt, so daß der Wassergehalt am Ende im Bereich von ungefähr 0,01 bis 0,05 %, vorzugsweise 0,01 bis 0,02 liegt.

Oligo- bzw. Polyether zur Herstellung der thermoplastischen Polyurethane sind beispielsweise solche auf Basis von Tetramethylenglykol, Propylenglykol und Ethylenglykol.

Polyacetale sind ebenfalls als Polyether zu verstehen und einsetzbar.

Die Oligoether bzw. Polyether sollen mittlere Molekulargewichte $\overline{M}n$ (Zahlenmittel, ermittelt über die OH-Zahl der Produkte) von 600 bis 2000 vorzugsweise von 1000 bis 2000 haben.

Als organisches Diisocyanat wird zur Herstellung der Polyurethane vorzugsweise 4,4′-Diphenylmethandiisocyanat verwendet. Es sollte weniger als 5 % 2,4′-Diphenylmethan-diisocyanat und weniger als 2 % des Dimeren von Diphenylmethan-diisocyanat enthalten. Es ist weiterhin wünschenswert, daß die Acidität, gerechnet als HCl im Bereich von c. 0,005 bis 0,2 % liegt. Die Acidität, gerechnet als % HCl, wird durch Extraktion des Chlorids aus dem Isocyanat in heißer, wäßriger Methanol-Lösung oder durch Freisetzung des Chlorides bei Hydrolyse mit Wasser und Titration des Extraktes mit Standard-Silbernitrat-Lösung bestimmt, um die darin vorhandene Chlorid-Ionen-Konzentration zu erhalten.

Es können auch andere Diisocyanate zur Herstellung der thermoplastischen Polyurethane verwendet werden, beispielsweise die Diisocyante des Ethylens, Ethylidens, Propylens, Butylens, Cyclopentylens-1,3, Cyclohexylens-1,4, Cyclohexylens-1,2, des 2,4-Tolylens, des 2,6-Tolylens, des p-Phenylens,des n-Phenylens, des Xylens, des 1,4-Naphthylens, des 1,5-Naphthylens, des 4,4′-Diphenylens, das 2,2-Diphenylpropan-4,4′-diisocyanat, das Azobenzol-4,4′-diisocyanat, des Diphenylsulfon-4,4′-diisocyanat, das Dichlorhexanmethylendiisocyanat, das Pentamethylen-diisocyanat, das Hexamethylen-diisocyanat, das 1-Chlorbenzol-2,4-diisocyanat, das Furfuryldiisocyanat, das Dicyclohexylmethan-diisocyanat, das Isophorondiisocyanat, das Diphenylethen-diisocyanat und Bis(-isocyanatophenyl)-ether von Ethylenglykol, Butandiol etc.

Als Kettenverlängerer können organische difunktionelle Verbindungen verwendet werden, die aktiven, mit Isocyanaten reaktiven, Wasserstoff enthalten, z.B. Diole, Hydroxycarbonsäuren, Dicarbonsäuren, Diamine und Alkanolamine und Wasser. Als solche sind beispielsweise Ethylen-, Propylen-, Butylenglykol, 1,4-Butandiol, Butandiol, Butindiol, Xylylenglykol, Amylenglykol, 1,4-Phenylen-bis-ß-hydroxy-ethylether, 1,3-Phenylen-bis-ß-hydroxyethylether, Bis-(hydroxymethyl-cyclohexan), Hexandiol, Adipinsäure, ω-Hydroxycapronsäure, Thiodiglykol, Ethylendiamin-, Propylen, Butylen-, Hexamethylen-, Cyclohexylen-, Phenylen-, Toluylen-, Xylylendiamin, Diaminodicyclohexylmethan, Isophorondiamin, 3,3′-Dichlorbenzidin, 3,3′-Dinitrobenzidin, Ethanolamin, Aminopropylalkohol, 2,2-Diemthyl-propanolamin, 3-Aminocyclhoexylalkohol und p-Aminobenzylalkohol zu nennen. Das Molverhältnis Oligo- bzw. Polyester zu bifunktionellen Kettenverlängerer bewegt sich im Bereich 1:1 bis 1:50, vorzugsweise 1:2 bis 1:30.

Außer difunktionellen Kettenverlängerern können auch in untergeordneten Mengen bis zu etwa 5 Mol-%, bezogen auf Mole eingesetzten bifunktionellen Kettenverlängerer, trifunktionelle oder mehr als trifunktionelle Kettenverlängerer eingesetzt werden.

Derartige trifunktionelle oder mehr als trifunktionelle Kettenverlängerer sind beispielsweise Glycerin, Trimethylolpropan, Hexantriol, Pentaerythrit und Triethanolamin.

Monofunktionelle Komponenten, beispielsweise Butanol, können auch zur Herstellung der thermoplastischen Polyurethane eingesetzt werden.

Die als Bausteine für die thermoplastischen Polyurethane genannten Diisocyanate, Oligoester, Polyester Polyether. Kettenverlängerer und monofunktionellen Komponenten sind entweder literaturbekannt oder nach literaturbekannten Verfahren erhältlich.

Die bekannte Herstellung der Polyurethane kann beispielsweise, wie folgt, durchgeführt werden:

So können beispielsweise die Oligo- bzw. Polyester, die organischen Diisocyanate und die Kettenverlängerer für sich vorzugsweise auf eine Temperatur von ca. 50 bis 220°C erhitzt und dann vermischt werden. Vorzugsweise werden die Oligo- bzw. Polyester zunächst einzeln erhitzt, dann mit den Kettenverlängerern gemischt und die erhaltene Mischung mit dem vorerhitzten Isocyanat vermischt.

Das Mischen der Ausgangskomponenten zur Herstellung der Polyurethane kann mit irgendeinem mechanischen Rührer erfolgen, der intensive Mischung innerhalb kurzer Zeit erlaubt. Falls die Viskosität der Mischung während des Rührens vorzeitig zu schnell steigen sollte, kann entweder die Temperatur gesenkt oder eine kleine Menge (0,001 bis 0,05 Gew.-%, bezogen auf Ester) Zitronensäure oder ähnliches zugegeben werden, um die Geschwindigkeit der Reaktion zu verkleinern. Zur Erhöhung der Reaktionsgeschwindigkeit können geeignete Katalysatoren, wie z.B. tertiäre Amine, die in dem US-Patent 2 729 618 genannt werden, zur Anwendung kommen.

Beispiele für solche Elastomere b3) sind die verschiedensten Kautschuke, wie Ethylen-Propylen-Kautschuk, Polyisopren, Polychloropren, Polysiloxane, ataktisches Polypropylen, Dien-, Olefin- und Acrylatkautschuke sowie Naturkautschuke, Styrol-Butadien-Blockcopolymere, Ethylen-Copolymerisate mit Vinylacetat oder mit (Meth)Acrylsäureestern, elastische Polyurethane, elastische Polycarbonat-Polyether- sowie Polyester-Polyether-Blockcopolymere.

Bevorzugt werden eingesetzt Copolymerisate - insbesondere Pfropfcopolymerisate (Pfropfkautschuke) - mit kautschukelastischen Eigenschaften, die im wesentlichen aus mindestens zwei der folgenden Monomeren erhältlich sind: Chloropren, Butadien, Isopren, Isobuten, Styrol, Acrylnitril, Ethylen, Propylen, Vinylacetat und (Meth)Acrylsäureester mit 1 bis 18 C-Atomen in der Alkoholkomponente, also Polymerisate, wie sie z.B. in "Methoden der Organischen Chemie", Houben-Weyl, Band 14/1, Georg Thieme Verlag, Stuttgart 1961, Seiten 393 bis 406 und in C.B. Bucknall, "Thoughened Plastics", Appl. Science Publishers, London, 1977 beschrieben sind. Die bevorzugten Polymerisate besitzen einen Gelgehalt von über 20, vorzugsweise über 40 Gew.-%.

Genannt werden z.B. Ethylen/Vinylacetat-Copolymerisate mit 15 bis 45 Gew.-% Vinylacetat-Einheiten und Schmelzindices von nicht fließfähig bis 1000, vorzugsweise von 0,1 bis 20, gemessen bei einer 190°C und 2,16 kp Belastung nach DIN 53 735.

Weiterhin werden genannt die sogenannten EPM- bzw. EPDM-Kautschuke, in denen das Gewichtsverhältnis von Ethylen- zu Propylenresten im Bereich von 40:60 bis 90:10, vorzugsweise 40:60 bis 65:35, liegt.

Die Mooney-Viskositäten ($ML_{1+4}$/100°C) der unvernetzten EPM- bzw. EPDM-Kautschuke liegen zwischen 25 bis 100, vorzugsweise zwischen 35 bis 90. Die Gelgehalte der unvernetzten EPM- bzw. EPDM-Kautschuke liegen unter 1 Gew.-%.

Die verwendeten Ethylen/Propylen-Copolymerisate (EPM) besitzen praktisch keine Doppelbindungen, während die Ethylen/Propylen/Dien-Terpolymerisate (EPDM) 1 bis 20 Doppelbindungen/1000 C-Atome aufweisen können. Als geeignete Dien-monomere im EPDM seien beispielsweise genannt: konjugierte Diene, z.B. Isopren und Butadien, und nicht-konjugierte Diene mit 5 bis 25 C-Atomen, z.B. 1,4-Pentadien, 1,4-Hexadien, 1,5-Hexadien, 2,5-Dimethyl-1,5-hexadien und 1,4-Octadien; cyclische Diene, z.B. Cyclopentadien, Cyclohexadien, Cyclooctadien und Dicyclopentadien; Alkenylnorbornene, z.B. 5-Ethyliden-2-norbornen, 5-Butyliden-2-norbornen, 2-Methallyl-5-norbornen, 2-Isopropenyl-5-norbornen und Tricyclodiene, z.B. 3-Methyltricyclo-(5.2.1.0.$^{2,6}$)-3,8-decadien. Bevorzugt seien die nicht-konjugierten Diene Hexadien-1,5, Ethyliden-norbornen und Dicylopentadien angeführt. Der Diengehalt im EPDM beträgt vorzugsweise 0,5 bis 10 Gew.-%.

Derartige EPM- bzw. EPDM-Kautschuke sind z.B. in der DE-OS 28 08 709 beschrieben.

Darüber hinaus sind als Elastomere C) geeignet selektiv hydrierte Blockcopolymerisate eines vinylaromatischen Monomeren (X) und eines konjugierten Diens (Y) vom X-Y-Typ. Diese Blockcopolymerisate können nach bekannten Verfahren hergestellt werden (beispielsweise Kraton G® der Shell).

Im allgemeinen kann für die Herstellung der geeigneten X-Y-Blockcopolymerisate aus z.B. Styrol, α-Methylstyrol und/oder Vinyltoluol und aus konjugierten Dienen, wie Butadien und/oder Isopren, die für die Herstellung von Styrol-Dien-Blockcopolymerisaten verwendete Technik benutzt werden, die in "Encyclopedia of Polymer Science and Technology", Bd. 15, Interscience, N.Y. (1971) auf den Seiten 508 ff' beschrieben ist. Die selektive Hydrierung kann auf an sich bekannten Wegen durchgeführt werden und bedeutet, daß die ethylenischen Doppelbindungen im wesentlichen vollständig hydriert werden, wobei die aromatischen Doppelbindungen im wesentlichen unbeeinflußt bleiben.

Derartige selektiv hydrierte Blockcopolymerisate werden z.B. in der DE-OS 30 00 282 beschrieben.

Ebenfalls geeignet sind mit Styrol und/oder Acrylnitril und/oder (Meth)-Acrylsäurealkylestern gepfropfte Polybutadiene, Butadien/Styrol-Copolymerisate und Poly(meth)acrylsäureester, z.B. Copolymerisate aus Styrol oder Alkylstyrol und konjugierten Dienen (schlagfestes Polystyrol), d.h. Copolymerisate der in der DE-OS 16 94 173 (= US-PS 3 564 077) beschriebenen Art, mit Acryl- oder Methacrylsäureestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 23 48 377 (= US-PS 3 919 353) oder in DE-OS 3 105 364 und DE-OS 3 019 233 beschrieben sind.

Besonders bevorzugte Elastomere sind ABS-Polymerisate (sowohl Misch- als auch Pfropftypen), wie sie z.B. in der DE-OS 20 35 390 (= US-PS 3 644 574) oder in der DE-OS 22 48 242 (= GB-PS 1 409 275) beschrieben sind.

Daneben werden besonders bevorzugt Elastomere eingesetzt, die durch Pfropfreaktion von

I. 10 bis 40, vorzugsweis 10 bis 35, insbesondere 15 bis 25, Gew.-%, bezogen auf Pfropfprodukt, mindestens eines (Meth-)Acrylsäureesters und/oder eines Gemisches aus

10 bis 35, vorzugsweise 20 bis 35, Gew.-%, bezogen auf Gemisch, Acrylnitril und

65 bis 90, vorzugsweise 65 bis 80 Gew.-% bezogen auf Gemisch, Styrol auf

II. 60 bis 90, vorzugsweise 65 bis 90, insbesondere 75 bis 85 Gew.-%, bezogen auf Pfropfprodukt eines Butadien-Polymerisats mit mindestens 70 Gew.-%, bezogen auf II, Butadienresten als Pfropfgrundlage erhältlich sind, wobei vorzugsweise der Gelanteil der Pfropfgrundlage II $\geqq$70 % (in Toluol gemessen), der Pfropfgrad G 0,15 bis 0,55 und der mittlere Teilchendurchmesser $d_{50}$ des Pfropfpolymerisats C) 0,2 bis 0,6, vorzugsweise 0,3 bis 0,5 µm betragen (vgl. z.B. DE-OS 3 324 398 und EP-A 56 243.

Besonders bevorzugte Elastomere sind auch Pfropfpolymerisate aus

a) 25 bis 98 Gew.-%, bezogen auf Pfropfprodukt, Acrylatkautschuk mit einer Glasübergangstemperatur unter -20°C als Pfropfgrundlage und

b) 2 bis 75 Gew.-%, bezogen auf Pfropfprodukt, mindestens eines polymerisierbaren, ethylenisch ungesättigten Monomeren, dessen bzw. deren in Abwesenheit von (a) entstandenen Homo- bzw. Copolymerisate eine Glasübergangstemperatur über 25°C hätten, als Pfropfmonomere (vgl. z.B. EP-A 50 265).

Neben den zuvor genannten Elastomeren können auch elastische Polyurethane (z.B. Texin®), elastische Polyester-Polyether-Blockcopolymere (z.B. Hytrel®) sowie elastische Polycarbonat-Polyether-Blockcopolymere eingesetzt werden. Diese Elastomeren sind bekannt und beispielsweise beschrieben in H.G. Elias, Makromoleküle, Hüthig u. Wepf Verlag Basel, 4. Auflage 1981, S. 787, und A. Noshay u. J.E. McGrath, Block Copolymers, Academic Press New York, 1977, S. 341.

Außerdem eignen sich als einzusetzende Elastomere Silikonpfropfkautschuke wie sie beispielsweise in DE-OS 3 629 763 beschrieben sind.

Diese Elastomeren sind bekannt.

Die erfindungsgemäßen Mischungen aus den Polycarbonaten a) und den Elastomeren b3) können beispielsweise durch Mischen der Komponenten a) und b3) in der Schmelze auf üblichen Aggregaten wie Knetern, Ein- oder Mehrwellenextrudern oder Walzen hergestellt werden.

Gegenstand der Erfindung ist auch ein Verfahren zur Herstellung von Mischungen aus

0,1 Gew.-% bis 99,9 Gew.-%, vorzugsweise 1 Gew.-% bis 98 Gew.-% und insbesondere 2,5 Gew.-% bis 90 Gew.-%, Polycarbonat a) mit 99,9 Gew.-% bis 0,1 Gew.-%, vorzugsweise 99 Gew.-% bis 2 Gew.-% und insbesondere 97,5 Gew.-% bis 10 Gew.-%, Elastomer b3), das dadurch gekennzeichnet ist, daß Polycarbonat a) aufgeschmolzen und Elastomer b3) zudosiert und in der Schmelze des Polycarbonats homogenisiert wird.

Die erfindungsgemäßen Mischungen aus den Polycarbonaten a) und den anderen Thermoplasten b1) oder b2) können beispielsweise durch Mischen von Lösungen der Komponenten a) und b) oder durch Mischen der Komponenten auf Knetern, Walzen oder Ein- bzw. Mehrwellenextrudern hergestellt werden.

Gegenstand der Erfindung ist auch ein Verfahren zur Herstellung von Mischungen aus

0,1 Gew.-% bis 99,9 Gew.-%, vorzugsweise 1 Gew.-% bis 98 Gew.-% und insbesondere 2,5 Gew.-% bis 90 Gew.-%, Polycarbonat a) mit 99,9 Gew.-% bis 0,1 Gew.-%, vorzugsweise 99 Gew.-% bis 2 Gew.-% und insbesondere 97,5 Gew.-% bis 10 Gew.-%, anderen Thermoplasten b1) oder b2), das dadurch gekennzeichnet ist, daß alle Komponenten als Lösungen gemischt werden und dieses Gemisch in üblicher Weise aufgearbeitet wird, oder daß alle Komponenten in der Schmelze gemischt und homogenisiert werden.

Den erfindungsgemäßen Mischungen können noch die für die Komponenten b) üblichen Additive als Komponente c) z. B. Füllstoffe und/oder Nukleierungsmittel und/oder Fasern und/oder Entformungsmittel und/oder Weichmacher und/oder Farbstoffe in den üblichen Mengen zugegeben werden.

Anorganische Füllstoffe sind beispielsweise Keramikfüllstoffe wie Aluminiumnitrit, Silicate, Titandioxid, Talkum, Kreide, Glimmer, Ruß, Graphit, Fasern sind beispielsweise solche aus Glas, aus Kohlenstoff oder aus flüssig-kristallinen Polymeren.

Nukleierungsmittel können beispielsweise sein Bariumsulfat, $TiO_2$.

Diese Additive können in den üblichen Mengen entweder vor der Herstellung der erfindungsgemäßen Mischungen den Komponenten b) oder zusammen mit den Polycarbonaten der Komponente a) den Komponenten b) zugemischt werden oder nachträglich den erfindungsgemäßen Mischungen aus den Komponenten a) und b) eingearbeitet werden.

Ebenso können den Polycarbonaten der Komponente a) - vor oder während oder nach der Abmischung mit dem Komponenten b) - die genannten Additive in den üblichen Mengen zugesetzt werden.

Die erfindungsgemäßen Mischungen lassen sich zu beliebigen Formkörpern auf üblichen Maschinen in üblicher Weise verarbeiten.

Die erfindungsgemäßen Mischungen können beispielsweise verwendet werden zur Herstellung von Radkappen, Armaturenbrettern, Säulenverkleidungen für Kraftfahrzeuge. Falls eine gute Zähigkeit auch bei tiefen Temperaturen erforderlich ist wird sie für Stoßstangen, Spoiler und Stoßleisten, sind Mischungen vorteilhaft, die als zweite Komponente Elastomere (Komponente b3)) enthalten.

Ferner können die erfindungsgemäßen Mischungen für Haushaltsgeräte wie Gehäuse von Elektrogeräten, Steckerleisten, Spülmulden verwendet werden.

Insbesondere können aus den Mischungen der Erfindung Folien hergestellt werden. Die Folien haben bevorzugte Dicken zwischen 1 und 1500 µm, insbesondere bevorzugte Dicken zwischen 10 und 900 µm.

Die erhaltenen Folien können in an sich bekannter Weise monoaxial oder biaxial gereckt werden, bevorzugt im Verhältnis 1:1,5 bis 1:3.

Die Folien können nach den bekannten Verfahren zur Folienerzeugung hergestellt werden, z.B. durch Extrusion einer Polymerschmelze durch eine Breitschlitzdüse, durch Blasen auf einer Folienblasmaschine, Tiefziehen oder Gießen. Dabei vergießt man eine konzentrierte Lösung des Polymeren in einem geeigneten Lösungsmittel auf eine ebene Unterlage, verdampft das Lösungsmittel und hebt die gebildete Folie von der Unterlage ab.

Durch Extrusion - im allgemeinen je nach Mischungskomponente b) und Gewichtszusammensetzung der Mischung aus Komponenten a), b) und c) - bei 80 bis 450°C - hergestellte Folien werden häufig nach Abkühlen um mindestens 20°C biaxial verstreckt. Zum Tiefziehen geeignete Folien kann man auch durch Auswalzen von vorgegebenen Formteilen aus den Mischungen aus a), b) und c) bei Temperaturen bis etwa 290°C erhalten.

Gießfolien erhält man durch Ausgießen von gegebenenfalls konzentrierten Lösungen der Polymermischungen auf ebene Oberflächen und Verdampfen des Lösungsmittels bei 25° C bis 280°C. Als ebene Fläche kann man neben planparallelen Platten aus Materialien geringer Oberflächenrauhigkeit wie z.B. Glas, Keramik, Stahl, etc. auch die Oberfläche einer Flüssigkeit verwenden, die eine höhere Dichte als die Polymerlösung hat und weder die Polymeren noch deren Lösungsmittel auflöst.

Die erfindungsgemäßen Folien können allein oder im Verbund mit Folien aus anderen Polymeren verwendet werden.

Je nach Wahl der Mischungszusammensetzung und der Komponenten b) und gegebenenfalls c) können insbesondere die Folien mit einer Dicke von bis zu 1000 µm, ganz besonders die mit einer Dicke bis zu 800 µm, eine hohe Lichtdurchlässigkeit, je nach Wahl einer zusätzlichen Folie für die Verbundfolie bzw. der Komponenten b)/c), eine gute Gleichmäßigkeit der Oberflächenstruktur haben. Diese Folien sind leicht bedruckbar und kratzfest.

Die erfindungsgemäßen Folien können in vielen Industriezweigen als Informationsträger eingesetzt werden. Anwendungsbeispiele sind Kontroll- und Warnanzeigen für KFZ-Instrumente und Skalen für Geräte im Haushalt, in der Industrie und im Büro sowie Elektroisolierfolien.

Insbesondere finden die Folien überall da Anwendung, wo eine Folie guter Wärmeformbeständigkeit gefragt ist.

Für manche Anwendungen kann es vorteilhaft sein, die erfindungsgemäßen Folien mit einem Schutzlack zu versehen.

Die Folien oder Verbundfolien können in bekannter Weise darüber hinaus als homogene Membrane, Kompositionsmembrane oder asymmetrische Membrane hergestellt werden bzw. verwendet werden. Die Membranen, Folien oder Verbundfolien können flach sein, Hohlkörper verschiedener Geometrien bilden - zylinderförmig, kugelförmig, schlauchförmig - oder auch Hohlfasern sein. Solche Formteile können nach den dem Fachmann bekannten Verfahren hergestellt werden.

Die erfindungsgemäßen Folien haben eine besonders hohe Wärmeformbeständigkeit und sind für viele Gase bei dennoch guter Selektivität durchlässig. Sie können daher vorteilhaft als Membrane für die Gaspermeation verwendet werden.

## Beispiele

C) Komponenten

C1) entspricht Beispiel B1)

C2) Polystyrol, hergestellt durch radiakalische Polymerisation von Styrol in bekannter Weise. Mw (gemessen durch Lichtstreuung) 260 000.

C3) Bisphenol-A-Polycarbonat mit einer relativen Viskosität $\eta_{rel}$ (gemessen in $CH_2Cl_2$ bei 25°C und C = 0,5 g/dl) von 1,28

C4) Polymethylmethacrylat V811 (Rohm & Haas)

C5) Polycaprolactam mit einer relativen Lösungsviskosität von ηrel 3,0 (gemessen als 0,5 gew.-%ige Lösung in m-Kresol)

C6) Polyethylenterephthalat mit einer Intrinsic-Viskosität von 0,72, gemessen in Phenol/o-Dichlorbenzol (Gewichtsverhältnis 1:1) bei 25°C

C7) Polybutylenterephthalat mit einer Intrinsic-Viskosität von 1,21, gemessen in Phenol/o-Dichlorbenzol (Gewichtsverhältnis 1:1) bei 25° C

C8) EPM-Kautschuk Exxelor VA 1803 der Firma Esso

C9) Ein Emulsionspolymerisat aus 80 Gew.-Teilen vernetztem Polybutadien, Gelgehalt über 70 Gew.-% (Toluol) und 20 Gew.-Teilen Pfropfauflage aus 18 Gew.-Teilen Methylmethacrylat und 2 Gew.-Teilen n-Butylacrylat, wobei der mittlere Teilchendurchmesser der in Latexform vorliegenden Pfropfgrundlage zwischen 0,3 und 0,4 µm lag.

C10) Poly(2,6-dimethyl-1,4-phenylen)-ether mit einer relativen Viskosität von rel = 1,62, gemessen in Chloroform bei 25°C (0,5 gew.-%ige Lösung).

C11) Aromatisches Polyestercarbonat auf Basis von Bisphenol A mit einem Esteranteil von 50 Gew.-% (Isophthalsäure : Terephthalsäure = 1:1) mit einer rel. Viskosität von 1,30 (0,5 gew.-%ige Lösung in Methylenchlorid).

C12) Aromatisches Polyestercarbonat auf Basis von Bisphenol A mit einem Esteranteil von 80 Gew.-% (Isophthalsäure : Terephthalsäure = 1:1 mit einer rel. Viskosität von 1,30 (0,5 gew.-%ige Lösung in Methylenchlorid).

C13) Polyethersulfon auf Basis Bisphenol A, hergestellt durch Umsetzung von Dichlordiphenylsulfon und Bisphenol A in Diphenylsulfon nach bekannten Verfahren, mit einer rel. Viskosität von 1,249 (0,5 gew.-%ige Lösung in Methylenchlorid).

C14) Polyetherketon auf Basis Bisphenol A, hergestellt durch Umsetzung von Difluorbenzophenon und Bisphenol A nach bekannten Verfahren, mit einer rel. Viskosität von 1,455 (0,5 gew.%ige Lösung in Methylenchlorid).

C15) Copolymerisat aus Styrol und Acrylnitril mit einem Acrylnitrilgehalt von 28 Gew.-%, hergestellt durch Emulsionspolymerisation.

C16) entspricht Beispiel B13)

C17) entspricht Beispiel B14)

C18) entspricht Beispiel B7)

D) Abmischungen

D1) 37 g der Substanz C1) wurden mit 37 g der Substanz C2) in jeweils 200 ml Methylenchlorid gelöst. Anschließend wurden die Lösungen vereinigt, das Solvens im Vakuum teilweise entfernt, bis sich eine eingedickte Lösung ergab, aus der auf einer Filmziehbank Folien einer Dicke von 200 µm hergestellt wurden. 6 Teilstücke dieser Folie wurden übereinandergelegt und bei 270°C unter einem Druck von 200 bar in Luft 5 Minuten verpreßt zu einem rechteckigen Formteil mit einer Dicke von 1.042 mm.

D2) 30 g der Substanz C1 wurden mit 30 g der Substanz C3) in jeweils 200 ml Methylenchlorid gelöst. Anschließend wurden die Lösungen vereinigt, die Lösung eingedickt wie in Beispiel D1), und eine Folie einer Dicke von 210 µm hergestellt. 6 Teilstücke der Folie wurden wie in Beispiel 2a) übereinandergelegt und bei 250° C unter einem Druck von 210 bar in Luft 5 Minuten zu einer rechteckigen Formteil mit einer Dicke von 0.989 mm verpreßt.

D3) 25 g der Substanz C1) wurden mit 25 g der Substanz C4) in jeweils 200 ml Methylenchlorid gelöst. Anschließend wurden die Lösungen vereinigt, das Solvens im Vakuum teilweise entfernt, bis sich eine eingedickte Lösung ergab, aus der auf einer Filmziehbank Folien einer Dicke von 200 µm hergestellt wurden. 6 Teilstücke dieser Folie wurden übereinandergelegt und bei 270°C unter einem Druck von 200 bar in Luft 5 Minuten verpreßt zu einem rechteckigen Formteil mit einer Dicke von 0,61 mm.

D4) 70 g der Substanz C5) werden mit 30 g der Substanz (ca. 260° C bis 280° C) C1) in einem Kolben aufgeschmolzen und homogenisiert. Nach dem Erkalten der Schmelze wird die Mischung zerkleinert und das Granulat wie in Beispiel D3) beschrieben zu einem Formteil der Dicke 1,6 mm verpreßt.

D5) 35 g der Substanz C6) wurde wie in Beispiel D4 beschrieben mit 15 g B1) zu einem Formteil der Dicke 1,6 mm verpreßt.

D6) 60 g der Substanz C16) werden wie in Beispiel D4) beschrieben mit 40 g der Substanz C7) vermischt und zu einem Formteil der Dicke 1,6 mm verpreßt.

D7) 40 g der Substanz C16) werden wie in Beispiel D4) beschrieben mit 60 g der Substanz C7) vermischt und zu einem Formteil der Dicke 1,6 mm verpreßt.

D8) 60 g der Substanz C16) werden wie in Beispiel D4) beschrieben mit 40 g der Substanz C6) vermischt und zu einem Formteil der Dicke 1,6 mm verpreßt.

D9) 40 g der Substanz C16) werden wie in Beispiel D4) beschrieben mit 60 g der Substanz C6) vermischt

und zu einem Formteil der Dicke 1,6 mm verpreßt.

D10) 80 Gew.-Teile der Substanz C16) werden auf einem Zweiwellenextruder bei Temperaturen von 340° C mit 20 Gew.-Teilen der Substanz C8) homogenisiert und auf einer üblichen Spritzgußmaschine zu 80 x 10 x 4 mm Prüfkörpern verspritzt.

D11) 80 Gew.-Teile der Substanz C16) werden auf einem Zweiwellenextruder bei Temperaturen von 340° C mit 20 Gew.-Teilen der Substanz C9) homogenisiert und auf einer üblichen Spritzgußmaschine zu 80 x 10 x 4 mm Prüfkörpern verspritzt.

D12) 70 g der Substanz C18) und 30 g der Substanz C11) werden in jeweils 400 ml Methylenchorid gelöst. Die Lösungen werden vereinigt und das Solvens in Vakuum weitgehend entfernt; aus der eingedickten Lösung werden auf einer Filmziehbank Folien mit einer Dicke von 190 µm hergestellt. 6 Teilstücke dieser Folie werden übereinandergelegt und bei 270° C unter einem Druck von 200 bar an Luft 5 Min verpreßt zu einem rechteckigen Formteil mit einer Dicke von 0,92 mm.

D13) 30 g der Substanz C18) und 30 g der Substanz C11) werden in jeweils 400 ml Methylenchorid gelöst. Die Lösungen werden vereinigt und das Solvens im Vakuum weitgehend entfernt; aus der eingedickten Lösung werden auf einer Filmziehbank Folien mit einer Dicke von 200 µm hergestellt. 6 Teilstücke dieser Folie werden übereinandergelegt und bei 270° C unter einem Druck von 200 bar an Luft 5 Min verpreßt zu einem rechteckigen Formteil mit einer Dicke von 1,0 mm.

D14) 70 g der Substanz C18) und 30 g der Substanz C12) werden in jeweils 400 ml Methylenchorid gelöst. Die Lösungen werden vereinigt und das Solvens im Vakuum weitgehend entfernt; aus der eingedickten Lösung werden auf einer Filmziehbank Folien mit einer Dicke von 200 µm hergestellt. 6 Teilstücke dieser Folie werden übereinandergelegt und bei 270° C unter einem Druck von 200 bar an Luft 5 Min verpreßt zu einem rechteckigen Formteil mit einer Dicke von 0,98 mm.

D15) 30 g der Substanz C18) und 70 g der Substanz C12) werden in jeweils 400 ml Methylenchlorid gelöst. Die Lösungen werden vereinigt und das Solvens im Vakuum weitgehend entfernt; aus der eingedickten Lösung werden auf einer Filmziehbank Folien mit einer Dicke von 180 µm hergestellt. 6 Teilstücke dieser Folie werden übereinandergelegt und bei 270° C unter einem Druck von 200 bar an Luft 5 Min verpreßt zu einem rechteckigen Formteil mit einer Dicke von 0,8 mm.

D16) 70 g der Substanz C18) und 30 g der Substanz C10) werden in jeweils 400 ml Tetrahydrofuran gelöst. Die Lösungen werden vereinigt und das Solvens im Vakuum weitgehend entfernt; aus der eingedickten Lösung werden auf einer Filmziehbank Folien mit einer Dicke von 190 µm hergestellt. 6 Teilstücke dieser Folie werden übereinandergelegt und bei 270° C unter einem Druck von 200 bar an Luft 5 Min verpreßt zu einem rechteckigen Formteil mit einer Dicke von 1,05 mm.

D17) 30 g der Substanz C18) und 70 g der Substanz C10) werden in jeweils 400 ml Tetrahydrofuran gelöst. Die Lösungen werden vereinigt und das Solvens im Vakuum weitgehend entfernt; aus der eingedickten Lösung werden auf einer Filmziehbank Folien mit einer Dicke von 200 µm hergestellt. 5 Teilstücke dieser Folie werden übereinandergelegt und bei 270° C unter einem Druck von 200 bar an Luft 5 Min verpreßt zu einem rechteckigen Formteil mit einer Dicke von 0,7 mm.

D18) 70 g der Substanz C18) werden wie in Beispiel D4) beschrieben mit 30 g der Substanz C13) vermischt und zu einem Formteil der Dicke 1,5 mm verpreßt.

D19) 70 g der Substanz C18) werden wie in Beispiel D4) beschrieben mit 30 g der Substanz C14) vermischt und zu einem Formteil der Dicke 1,6 mm verpreßt.

D20) 60 g der Substanz C17) und 40 g der Substanz C15) werden in jeweils 400 ml Methylenchlorid gelöst. Die Lösungen werden vereinigt und das Solvens im Vakuum weitgehend entfernt; aus der eingedickten Lösung werden auf einer Filmziehbank Folien mit einer Dicke von 200 µm hergestellt. 6 Teilstücke dieser Folien werden übereinandergelegt und bei 270° C unter einem Druck von 200 bar an Luft 5 Min verpreßt zu einem rechteckigen Formteil mit einer Dicke von 1,0 mm.

E) Prüfung der nach D hergestellten Proben.

Von beiden Proben wurde der Schubmodul mit einem Torsionspendel der Firma Brabender, Typ 802301 oberhalb Raumtemperatur gemessen. Die Probe wurde mit einer Aufheizrate von 1 K/min an die unten genannte Temperatur herangeführt, die Proben erfuhren während der gesamten Meßzeit eine Zugbelastung von 10 p. Das Drehmoment betrug 1570 $gcm^2$. Bei Werten des Moduls unterhalb 10 Mpa sind Verformungen der Probe deutlich wahrnehmbar, weil die Probe nicht mehr genügend innere Festigkeit hat.

Ergebnisse:

| Nr. des Beispiels | Schub-Modul in MPa bei T = 50° C | T = 160° C | T = 200° C |
|---|---|---|---|
| Substanz C2) | 1000 | < 10 | < 10 |
| Substanz C3) | 950 | < 10 | < 10 |
| Substanz C4) | 980 | < 10 | < 10 |
| Substanz C5) | 400 | 120 | 70 |
| Substanz C6) | 800 | 50 | 40 |
| D1) | 1000 | 80 | 65 |
| D2) | 950 | 230 | 57 |
| D3) | 1050 | 20 | - |
| D4) | 1000 | 200 | 40 |
| D5) | 950 | 180 | 80 |
| D6) | 950 | 150 | 20 |
| D7) | 900 | 120 | 25 |
| D8) | 900 | 400 | 20 |
| D9) | 900 | 200 | 25 |
| D10) | 400 | 290 | 180 |
| D11) | 700 | 550 | 10 |
| D12) | formstabil bis 230° C | | |
| D13) | formstabil bis 230° C | | |
| D14) | formstabil bis 230° C | | |
| D15) | formstabil bis 230° C | | |
| D16) | formstabil bis 230° C, die Komponenten sind teilverträglich | | |
| D17) | formstabil bis 220° C, die Komponenten sind teilverträglich | | |
| D18) | formstabil bis 234° C | | |
| D19) | formstabil bis 234° C | | |
| D20) | formstabil bis 177° C | | |

F) Charakterisierung des Permeationsverhaltens:

Bestimmung der Gasdurchlässigkeit (Permeation) von Polymermembranen.

Der Durchgang eines Gases durch eine dichte Polymermembran wird durch einen Lösungs-Diffusionsvorgang beschrieben. Die kennzeichnende Konstante für diesen Prozess ist der Permeationskoeffizient P, der angibt, welches Gasvolumen V bei gegebener Druckdifferenz $\Delta p$ in einer bestimmten Zeit t durch eine Folie bekannter Fläche F und Dicke d hindurchtritt. Für den stationären Zustand läßt sich aus den Differentialglei-

chungen des Permeationsvorgangs ableiten:

$$P = \frac{V \cdot d}{F \cdot t \cdot \Delta p} \quad (1)$$

Darüberhinaus ist die Permeation abhängig von der Temperatur und der Gasfeuchte.

Die Meßanordnung besteht aus einem thermostatisierten Zwei-Kammer-System. Die eine Kammer ist für die Aufnahme des Vorgabegases und die andere für die Aufnahme des Permeates ausgelegt, beide sind durch die zu messende Membran getrennt.

Vor der Gasvorgabe werden beide Kammern auf $10^{-3}$ mbar evakuiert und die Vorgabekammer mit Gas gefüllt. Das permeierte Gas (inerte Gase) bewirkt dann in der Permeatkammer bei konstantem Volumen einen Druckanstieg, der quantitativ mit einem Druckaufnehmer (Baratron der Firma MKS) in Abhängigkeit von der Zeit bis in den stationären Gasdurchgang registriert wird. Hieraus wird V bei NTP errechnet. Die vorgegebene Druckdifferenz unter Berücksichtigung des äußeren Luftdruckes $\Delta p$ wird jeweils auf $10^5$ Pa eingestellt. Die Membranfläche F ist bekannt. Die Membrandicke d wird mittels Mikrometerschraube als Mittel aus 10 unabhängigen über die Membranfläche verteilter Dickenmessungen ermittelt.

Aus diesen Größen ist der Permeationskoeffizient P nach (1) zu bestimmen mit der Dimension

$$\frac{cm^3\ (NTP) \cdot mm}{m^2 \cdot 24\ h\ 10^5\ Pa}$$

wobei auf eine Membrandicke von 1 mm bezogen ist.

Weitere Meßparameter sind:
Temperatur: 25 ± 1°C
rel. Gasfeuchte: 0%

G) Herstellung einer Folie

Beispiel G1

20 g Polycarbonat entsprechend Beispiel B 2 und 20 g aromatisches Polyestercarbonat aus 50 Gew.-Teilen Polycarbonat und 50 Gew.-Teilen aromatischem Polyester auf Basis Bisphenol-A und Iso/Terephthalsäure 1 : 1 mit einer relativen Lösungsviskosität, gemessen in Methylenchlorid bei c = 0,5 g/dl und 25° C von 1,30 und einer Glastemperatur von 172° C wurden jeweils in 200 ml Methylenchlorid unter intensivem Umrühren gelöst, die beiden Lösungen zusammengeführt und nach Eindicken auf einer ebenen Glasplatte eine Folie einer Dicke von etwa 150 µm hergestellt. Die Folie war noch bei 190° C formstabil. Die Folie wurde 4 Stunden unter Vakuum bei einer Temperatur von 90° C getrocknet. Anschließend wurde der Permeationskoeffizient P gemessen:
für $O_2$: 184,9
für $CO_2$: 1106,6
für $N_2$: 39,5
für $CH_4$: 42,3

Diese Folie wurde mit einer Folie aus Bisphenol A Polycarbonat mit einer relativen Lösungsviskosität von 1,28 und einer Glastemperatur von 150° C (Dicke 154 µm) durch Verpressen bei etwa 200° C unter einem Druck von 210 bar (Verpresszeit etwa 3 Minuten) zu einer Verbundfolie verarbeitet, die eine Dicke von etwa 250 µm hatte.

Auch diese Verbundfolie war noch bei 190° C formstabil. Permeaitonskoeffizient P:
für $O_2$: 112,3
für $CO_2$: 703,7
für $N_2$: 31,4
(Messung wie oben).

Beispiel G2)

Aus 15 g Poly-para-phenylensulfid, hergestellt nach EP-PS 142 024, Beispiel 2, mit einer Schmelzviskosität von 120 Pa.s, gemessen bei 306° C und einer Scherrate von 1000/sec und weiteren 15 g der Substanz C1 (entspricht Beispiel B1) wurde durch inniges Vermischen in einem Kleinkneter bei etwa 310°C eine Mischung hergestellt. Anschließend wurde aus der vermischten Menge bei 280° C unter Anwendung eines Druckes von 200 bar nach ca. 4-minütigem Pressen eine Folie einer Dicke von etwa 403 µm gepreßt.

Bei guter Wärmeformbeständigkeit ohne großen Modulabfall oberhalb 100° C bis 230° C ergaben sich folgende Permeationswerte (gemessen wie oben angegeben):
für $O_2$: 27,1
für $CO_2$: 114,3.

Zum Vergleich wurde die Permeation für $O_2$ und $CO_2$ nur des Poly-para-phenylensulfids gemessen. Die entsprechende Folie wurde hergestellt aus dem schon oben beschriebenen Material durch 4-minütiges Pressen bei ca. 280° C. Die Folie hatte eine Dicke von 387 µm.
Permeation für $O_2$; 4,4
Permeation für $CO_2$: 18,6

Die Folie zeigte zwischen 80° C und 150° C einen deutlichen Modulabfall.

Beispiel G3

An einer Folie, hergestellt auf einer Filmziehbank gemäß Beispiel D3), mit einer Dicke von 61 µm wurden die Permeationskoeffizienten P bestimmt:
$O_2$ 21,2
$N_2$ 2,7
$CH_4$ 3,5
$CO_2$ 94,2
Die Folie war bis ca. 160° C formstabil.

Beispiel G4

An einer Folie, hergestellt gemäß Beispiel D2), mit einer Dicke von 100 µm wurden die Permeationskoeffizienten P bestimmt:
$O_2$ 136,9
$N_2$ 27,4
$CH_4$ 39,1
$CO_2$ 836,4
Die Folie war bis ca. 180° C formstabil.

Die erfindungsgemäßen Beispiele belegen daher den großen Vorteil den die erfindungsgemäßen Folien haben: gute Wärmeformbeständigkeit und gute Permeationseigenschaften.

**Patentansprüche**

1. Mischungen enthaltend
a) thermoplastische Polycarbonate auf Basis von Diphenolen der Formel (I)

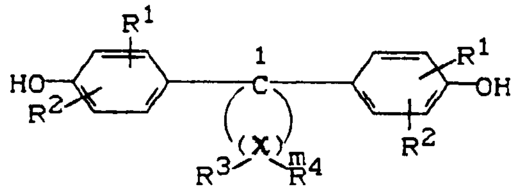

(I),

worin
$R^1$ und $R^2$ unabhängig voneinander Wasserstoff, Halogen, $C_1$-$C_8$-Alkyl, $C_5$-$C_6$-Cycloalkyl, $C_6$-$C_{10}$-Aryl und $C_7$-$C_{12}$-Aralkyl,
m eine ganze Zahl von 4 bis 7,
$R^3$ und $R^4$ für jedes X individuell wählbar, unabhängig voneinander Wasserstoff oder $C_1$-$C_6$-Alkyl und
X Kohlenstoff bedeuten,
mit der Maßgabe, daß an mindestens einem Atom X beide substituenten $R^3$ und $R^4$ Alkylgruppen sind:
und
b) Elastomere oder andere Thermoplasten als die der Komponente (a) und gegebenenfalls
c) übliche Additive.
2. Mischungen enthaltend

a) 0,1 Gew.-% bis 99,9 Gew.-% hochmolekulare, thermoplastische, aromatische Polycarbonate mit mittleren Molekulargewichten $\overline{M}w$ (Gewichtsmittel) von mindestens 10 000, die bifunktionelle Carbonatstruktureinheiten der Formel (Ia)

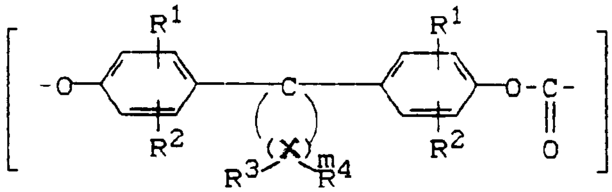

(Ia)

worin
X, $R^1$, $R^2$, $R^3$, $R^4$ und m die für Formel (I) in Anspruch 1 genannte Bedeutung haben,
in Mengen von 100 Mol-% bis 2 Mol-%, bezogen jeweils auf die Gesamtmenge von 100 Mol-% an difunktionellen Carbonatstruktureinheiten neben der zu 100 Mol-% komplementären Menge anderer difunktioneller Carbonatstruktureinheiten enthalten, und
b) 99,9 Gew.-% bis 0,1 Gew.-% Elastomere oder andere Thermoplasten als die Polycarbonate (a).

3. Verfahren zur Herstellung der Mischungen der Ansprüche 1 und 2, enthaltend als (b) Elastomere, dadurch gekennzeichnet, daß (a) aufgeschmolzen und das Elastomer (b) und gegebenenfalls übliche Additive (c) zudosiert und in der Schmelze der Komponente (a) homogenisiert werden.

4. Verfahren zur Herstellung der Mischungen der Ansprüche 1 und 2, enthaltend als (b) andere Thermoplasten als die Polycarbonate (a), dadurch gekennzeichnet, daß (a), (b) und gegebenenfalls übliche Additive (c) als Lösungen gemischt werden und dieses Gemisch in üblicher Weise aufgearbeitet wird oder in der Schmelze gemischt und homogenisiert werden.

5. Folien aus den Polymermischungen gemäß Anspruch 1.

6. Folien aus den Polymermischungen gemäß Anspruch 1 mit einer Dicke von 1 - 1500 µm.

7. Verbundfolien aus den Folien gemäß Anspruch 5 und anderen Polymerfolien.

## Claims

1. Blends containing
a) thermoplastic polycarbonates based on diphenols corresponding to formula (I)

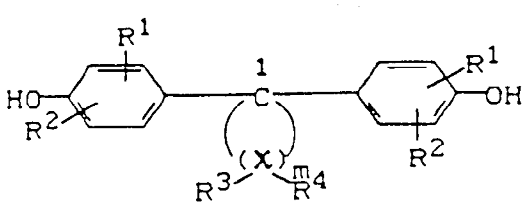

(I),

in which
$R^1$ and $R^2$ independently of one another represent hydrogen, halogen, $C_1$-$C_8$ alkyl, $C_5$-$C_6$ cycloalkyl, $C_5$-$C_{10}$ aryl and $C_7$-$C_{12}$ aralkyl,
m is an integer of from 4 to 7,
$R^3$ and $R^4$ may be individually selected for each X and independently of one another represent hydrogen or $C_1$-$C_6$ alkyl and
X represents carbon,
with the proviso that, at at least one atom X, both substituents $R^3$ and $R^4$ are alkyl groups,
and

b) elastomers or other thermoplastics than those of com ponent a) and, optionally,

c) standard additives.

2. Blends containing

a) 0.1 to 99.9% by weight high molecular weight, thermo plastic aromatic polycarbonates having average molecular weights Mw (weight average) of at least 10,000 which contain bifunctional carbonate structural units corresponding to the formula

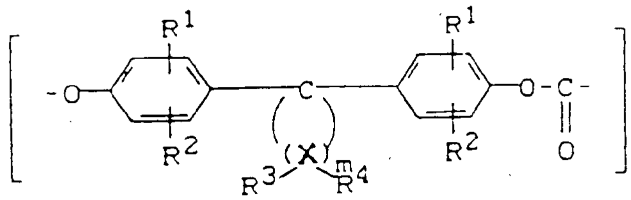

(Ia)

in which

X, $R^1$, $R^2$, $R^3$, $R^4$ and m have the meanings defined for formula (I) in claim 1,

in quantities of 100 mol-% to 2 mol-%, based on the total quantity of 100 mol-% of difunctional carbonate structural units in addition to the quantity - complementary to 100 mol-% - of other carbonate structural units, and

b) 99.9 to 0.1% by weight elastomers or other thermoplas tics than the polycarbonates (a).

3. A process for the production of the blends claimed in claims 1 and 2 containing elastomers as (b), characterized in that (a) is melted and the elastomer (b) and, optionally, typical additives (c) are added and homogenized in the melt of component (a).

4. A process for the production of the blends claimed in claims 1 and 2 containing as (b) other thermoplastics than the polycarbonates (a), characterized in that (a), (b) and, optionally, standard additives(s) are mixed in the form of solutions and the resulting blend is worked up in the usual way and mixed and homogenized in the melt.

5. Films of the polymer blends claimed in claim 1.

6. Films of the polymer blends claimed in claim 1 having a thickness of 1 to 15,00 µm.

7. Composite films of the films claimed in claim 5 and other polymer films.

**Revendications**

1. Mélanges contenant

a) des polycarbonates thermoplastiques à base de diphénols de formule (I)

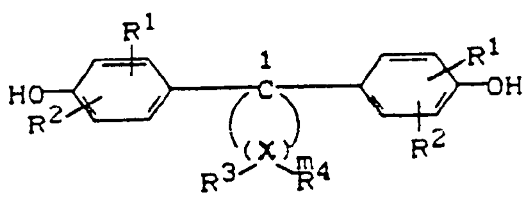

(I),

dans laquelle

$R^1$ et $R^2$ représentent, indépendamment l'un de l'autre, un atome d'hydrogène, un atome d'halogène, un groupe alkyle en $C_1$-$C_8$, un groupe cycloalkyle en $C_5$-$C_6$, un groupe aryle en $C_6$-$C_{10}$ et un groupe aralkyle en $C_7$-$C_{12}$,

m représente un nombre entier de 4 à 7,

$R^3$ et $R^4$ représentent, de manière individuellement sélectionnable pour chaque X, indépendamment l'un de l'autre, un atome d'hydrogène ou un groupe alkyle en $C_1$-$C_6$ et

X représente un atome de carbone,

avec cette condition que **les deux** substituants $R^3$ et $R^4$ d'au moins un atome X représentent des groupes

alkyle
et
b) des élastomères ou des composés thermoplastiques autres que le composant (a) et éventuellement
c) des additifs habituels,

2. Mélanges contenant
a) de 0,1% en poids à 99,9% en poids de polycarnonates aromatiques thermoplastiques à poids moléculaires moyens Mw (en poids) élevés d'au moins 10.000, qui contiennent des unités de structure de carbonate difonctionnelles de formule (Ia)

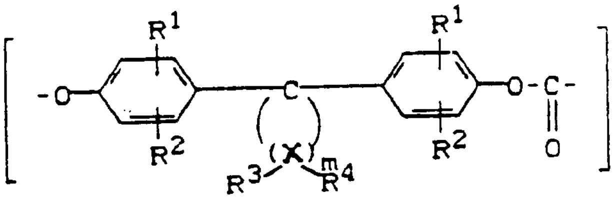

(Ia)

dans laquelle
X, $R^1$ , $R^2$, $R^3$, $R^4$ et m ont la signification mentionnée pour la formule (I) dans la revendication 1,
dans des quantités de 100 moles pour cent à 2 moles pour cent rapportées chaque fois à la quantité totale de 100 moles pour cent d'unités de structure de carbonate difonctionnelles, en plus de la quantité complémentaire d'autres unités de structure de carbonate difonctionnelles, pour compléter à 100 moles pour cent
b) de 99,9% en poids à 0,1% en poids d'élastomères ou de composés thermoplastiques autres que les polycarbonates (a).

3. Procédé pour la préparation des mélanges selon les revendications 1 et 2, contenant, comme (b), des élastomères, caractérisé en ce qu'on fait fondre (a) et on procède à une addition dosée de l'élastomère (b) et éventuellement d'additifs habituels (c) et on les homogénéise dans la masse fondue du composant (a).

4. Procédé pour la préparation des mélanges selon les revendications 1 et 2, contenant, comme (b), des composés thermoplastiques autres que les polycarbonates (a), **caractérisé en ce qu'**on mélange (a), (b) et éventuellement les additifs habituels (c) en solutions et on traite ce mélange de la manière habituelle, ou bien on les mélange dans la masse fondue et on les homogénéise.

5. Feuilles minces obtenues à partir des mélanges de polymères selon la revendication 1.

6. Feuilles minces obtenues à partir des mélanges de polymères selon la revendication 1, ayant une épaisseur de 1 - 1500 µm.

7. Feuilles composites obtenues à partir des feuilles minces selon la revendication 5 et d'autres feuilles de polymères.